(19) Europäisches Patentamt / European Patent Office / Office européen des brevets

(11) **EP 4 407 282 B1**

(12) **FASCICULE DE BREVET EUROPEEN**

(45) Date de publication et mention de la délivrance du brevet:
**01.10.2025 Bulletin 2025/40**

(21) Numéro de dépôt: **23219344.1**

(22) Date de dépôt: **21.12.2023**

(51) Classification Internationale des Brevets (IPC):
**G01H 1/00** *(2006.01)* **G01H 1/12** *(2006.01)*
**G01M 13/028** *(2019.01)*

(52) Classification Coopérative des Brevets (CPC):
**G01H 1/003; G01H 1/12; G01M 13/028**

(54) **PROCÉDÉS DE DÉTERMINATION DE LA CYCLOSTATIONNARITÉ D'UN SIGNAL VIBRATOIRE RELATIF À UN SYSTÈME MÉCANIQUE, D'AGENCEMENT DE CAPTEURS VIBRATOIRES POUR UNE SURVEILLANCE D'UN TEL SYSTÈME ET DE SURVEILLANCE**

VERFAHREN ZUR BESTIMMUNG DER ZYKLOSTATIONÄREN EIGENSCHAFTEN EINES SCHWINGUNGSSIGNALS IN BEZUG AUF EIN MECHANISCHES SYSTEM, ZUR ANORDNUNG VON SCHWINGUNGSSENSOREN ZUR ÜBERWACHUNG EINES SOLCHEN SYSTEMS UND ZUR ÜBERWACHUNG

METHODS FOR DETERMINING CYCLOSTATIONARYITY OF A VIBRATION SIGNAL RELATIVE TO A MECHANICAL SYSTEM, FOR ARRANGING VIBRATORY SENSORS FOR MONITORING SUCH A SYSTEM AND FOR MONITORING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.01.2023 FR 2300839**

(43) Date de publication de la demande:
**31.07.2024 Bulletin 2024/31**

(73) Titulaire: **Airbus Helicopters**
**13725 Marignane Cedex (FR)**

(72) Inventeurs:
- **MOREL, Hervé**
  **13100 AIX EN PROVENCE (FR)**
- **JOUVE, Jérémy**
  **13560 SENAS (FR)**
- **HAD, Anas**
  **42300 ROANNE (FR)**
- **ANDRE, Hugo**
  **42300 ROANNE (FR)**
- **EL BADAOUI, Mohamed**
  **42153 RIORGES (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
- **KASS SOUHAYB ET AL: "Self-running bearing diagnosis based on scalar indicator using fast order frequency spectral coherence", MEASUREMENT, vol. 138, 25 February 2019 (2019-02-25), pages 467 - 484, XP085662099, ISSN: 0263-2241, DOI: 10.1016/J.MEASUREMENT.2019.02.046**
- **RAAD ET AL: "Indicators of cyclostationarity: Theory and application to gear fault monitoring", MECHANICAL SYSTEMS AND SIGNAL PROCESSING, ELSEVIER, AMSTERDAM, NL, vol. 22, no. 3, 16 January 2008 (2008-01-16), pages 574 - 587, XP022423344, ISSN: 0888-3270, DOI: 10.1016/J.YMSSP.2007.09.011**
- **ANTONI ET AL: "Cyclic spectral analysis of rolling-element bearing signals: Facts and fictions", JOURNAL OF SOUND AND VIBRATION, ELSEVIER, AMSTERDAM , NL, vol. 304, no. 3-5, 22 May 2007 (2007-05-22), pages 497 - 529, XP022083965, ISSN: 0022-460X, DOI: 10.1016/J.JSV.2007.02.029**

EP 4 407 282 B1

**(Cont. page suivante)**

- XIAOFENG LIU ET AL: "Application of order cyclostationary demodulation to damage detection in a direct-driven wind turbine bearing", MEASUREMENT SCIENCE AND TECHNOLOGY, IOP, BRISTOL, GB, vol. 25, no. 2, 20 December 2013 (2013-12-20), pages 25004, XP020257048, ISSN: 0957-0233, [retrieved on 20131220], DOI: 10.1088/0957-0233/25/2/025004
- ANTONI ET AL: "Cyclostationarity by examples", MECHANICAL SYSTEMS AND SIGNAL PROCESSING, ELSEVIER, AMSTERDAM, NL, vol. 23, no. 4, 1 May 2009 (2009-05-01), pages 987 - 1036, XP025928931, ISSN: 0888-3270, [retrieved on 20090202], DOI: 10.1016/J.YMSSP.2008.10.010
- DANDAWATE A V ET AL: "Statistical Tests for Presence of Cyclostationarity", IEEE TRANSACTIONS ON SIGNAL PROCESSING, IEEE, USA, vol. 42, no. 9, 1 September 1994 (1994-09-01), pages 2355 - 2369, XP002381419, ISSN: 1053-587X, DOI: 10.1109/78.317857

**Description**

La présente invention se situe dans le domaine des systèmes de surveillance du fonctionnement des systèmes mécaniques, en particulier des systèmes mécaniques comportant au moins un organe tournant.

La présente invention concerne un procédé et un dispositif de détermination de la cyclostationnarité d'un signal vibratoire relatif à un système mécanique comportant un organe tournant.

La présente invention concerne aussi un procédé et un dispositif d'agencement de capteurs vibratoires sur un système mécanique comportant au moins un organe tournant.

La présente invention concerne enfin un procédé et un dispositif de surveillance d'un système mécanique comportant au moins un organe tournant. Ce procédé et ce dispositif de surveillance peut par exemple s'appliquer à la surveillance d'un mécanisme de transmission de puissance agencé entre au moins un moteur, thermique ou électrique, et au moins un rotor d'un aéronef.

Un tel système mécanique comporte au moins un organe tournant, par exemple un arbre d'entrée et/ou un arbre de sortie. Par souci de simplification, un système mécanique comportant au moins un organe tournant est désigné par la suite par l'expression « système mécanique ».

Par exemple, un système mécanique peut comporter un ou des paliers afin de guider en rotation un ou des organes tournants. Un palier comporte, par exemple, un roulement muni d'une ou de plusieurs rangées d'éléments roulants tels que des billes, des rouleaux ou autres.

Un tel système mécanique peut être muni d'au moins une roue dentée, un pignon, une couronne dentée afin de fournir une réduction ou une augmentation de la vitesse de rotation entre deux organes tournants du système mécanique, notamment entre un arbre d'entrée et un arbre de sortie.

Un tel système mécanique peut, par exemple, être muni d'un train épicycloïdal d'engrenages permettant de fournir un grand rapport de réduction de la vitesse de rotation entre deux organes tournants du système mécanique.

Un tel système mécanique peut, par exemple, être une boîte de vitesse ou une boîte de transmission de puissance d'un véhicule, notamment d'un aéronef.

Une panne ou un dysfonctionnement d'un tel système mécanique peut intervenir, par exemple, consécutivement à l'apparition d'un défaut sur un palier, en particulier un roulement, et/ou sur une roue dentée, un pignon, une couronne dentée. Un tel défaut peut par exemple prendre la forme d'une crique, d'un écaillage, d'une fissure, voire une rupture, sur une roue dentée, un pignon, une couronne dentée ou un palier. Un tel défaut peut aussi prendre la forme d'un grippage d'un élément roulant.

Certains systèmes de surveillance désignés par l'acronyme *HUMS* pour « Health and Usage Monitoring System » en langue anglaise ont pour but de surveiller un ou plusieurs systèmes mécaniques par l'intermédiaire de différents capteurs en suivant l'évolution d'un ensemble d'indicateurs de surveillance. Ces indicateurs de surveillance sont calculés à partir des mesures d'un ou de plusieurs capteur(s) afin de caractériser l'état et le fonctionnement de chaque système mécanique. Par exemple, un indicateur de surveillance peut être défini par un signal fourni par un capteur ou en combinant les signaux de plusieurs capteurs. Plusieurs indicateurs de surveillance peuvent également exploiter les mesures issues d'un seul et même capteur à travers diverses caractéristiques du signal fourni par ce capteur, tel son spectre temporel ou fréquentiel.

L'évolution de chaque indicateur de surveillance peut être comparée à un seuil de détection afin de détecter ou d'anticiper un éventuel défaut ou une panne du système mécanique surveillé. La valeur de chaque seuil de détection peut être obtenue par l'expérience, par une analyse statistique d'un historique de mesures issues de plusieurs systèmes mécaniques similaires ou bien par un apprentissage individuel sur un système mécanique donné.

Un indicateur de surveillance peut prendre la forme d'un indicateur vibratoire évalué à l'aide d'un capteur comportant au moins un accéléromètre, un tachymètre ou une jauge de contrainte par exemple. Un tel indicateur de surveillance peut dans ce cas être égal à l'amplitude maximale d'un signal vibratoire temporel fourni par un accéléromètre par exemple.

Un traitement de ces signaux est par exemple décrit dans la publication "Investigation of effectiveness of some vibration-based techniques in early detection of real-time fatigue failure in gears" de Hasan OZTURK, Isa YESILYURT et Mustafa SABUNCU (Shock and vibration 12 - 2010 - 741-747).

Le document EP3531098 présente un procédé de surveillance et de détection d'une dégradation dans au moins une pièce mobile en rotation d'un mécanisme tournant d'un aéronef. Ce procédé utilise au moins un capteur vibratoire solidaire d'un carter fixe de l'aéronef et agencé à proximité du mécanisme tournant pour mesurer des accélérations suivant au moins une direction et pour générer un signal vibratoire temporel. Au moins un organe de mesure permet de mesurer une position angulaire de chaque pièce mobile.

Pour un signal exprimé dans le domaine temporel, un indicateur peut être déterminé à partir de fonctions statistiques telles que la moyenne quadratique, le facteur de crête, le coefficient d'asymétrie ou le coefficient d'aplatissement d'une distribution par exemple.

Pour un signal variant dans le domaine fréquentiel, un indicateur peut être déterminé à partir de la fréquence moyenne ou de la fréquence de déviation standard.

D'autres indicateurs peuvent être construits à partir de décompositions du signal en temps et en fréquence telles que la transformée en ondelettes, la décomposition en mode empirique ou la transformée de Fourier à court-terme par exemple.

La plupart de ces indicateurs sont calculés à partir de prétraitements effectués sur un signal brut mesuré par un capteur afin d'éliminer ou de réduire significativement le bruit et/ou les fluctuations de la vitesse des composants surveillés. Parmi ces prétraitements, tels qu'un ré-échantillonnage angulaire, un filtrage du signal par calcul d'une moyenne sur plusieurs cycles ou sur plusieurs périodes peut aussi être utilisé, avec pour objectif d'atténuer certaines composantes du signal brut telles que par exemple une composante aléatoire et/ou un bruit.

La publication « Aide à l'interprétation des signaux cyclostationnaires » de F. BONNARDOT, A. AL ZOHBI, M. EL BADAOUI, et F. GUILLET (CNR'IUT, Tarbes, 2003) décrit par exemple l'analyse de signaux vibratoires variant selon la position angulaire d'une pièce mobile en rotation et l'utilisation de calculs statistiques afin de déduire la périodicité de ces signaux selon l'angle de la pièce mobile et, par suite une cyclostationnarité de ces signaux. La moyenne synchrone et la variance synchrone sont des signaux de surveillance utilisés pour déterminer la cyclostationnarité de signaux vibratoires.

La publication « Extraction of tacho information from a vibration signal for improved synchronous averaging », de M.D. COATS, N. SAWALHI, et R. B. RANDALL (Annual Conference of the Australian Acoustical Society 2009 - Acoustics 2009: Research to Consulting, pp. 187-194, 2009) présente une analyse d'un arbre rotatif, en particulier d'un arbre d'une turbine à gaz, à l'aide d'un tachymètre couplé à un arbre auxiliaire via une boîte de vitesses à rapport de réduction de vitesse inconnu.

La publication « Self-running bearing diagnosis based on scalar indicator using fast order frequency spectral coherence » de KASS SOUHAYB ET AL ( Février 2019) décrit un procédé de diagnostic d'un roulement à billes pour identifier un défaut, en utilisant la cyclostationnarité d'un signal vibratoire fourni par un capteur. Ce procédé utilise la transformation de ce signal vibratoire temporel en un signal angulaire, puis le calcul d'un indicateur de cyclostationnarité. Enfin, un test statique est appliqué à cet indicateur de cyclostationnarité pour déterminer s'il est cyclostationnaire en le comparant à un seuil.

La publication « Indicators of cyclostationarity: Theory and application to gear fault monitoring » de RAAD ET AL ( janvier 2008) décrit l'utilisation d'indicateurs de cyclostationnarité d'ordre 1 à 4 appliqués à des signaux vibratoires pour diagnostiquer la présence d'un défaut sur un système mécanique par l'acquisition d'un signal vibratoire temporel et sa transformation en un signal angulaire. Un indicateur de cyclostationnarité relatif à ce signal angulaire est calculé et comparé à un seuil pour déterminer la présence ou non d'un défaut.

La publication « Cyclic spectral analysis of rolling-element bearing signals: Facts and fictions » de ANTONI ET AL ( mai 2007) décrit l'application d'indicateur de cyclostationnarité à un signal vibratoire spectral (fréquentiel) établi par transformation d'un signal vibratoire temporel.

La publication « Application of order cyclostationary demodulation to damage detection in a direct-driven wind turbine bearing » de XIAOFENG LIU ET AL ( décembre 2013) décrit l'application d'indicateur de cyclostationnarité à un signal vibratoire angulaire établi par transformation d'un signal vibratoire temporel, et sa comparaison à un seuil.

La publication « Cyclostationarity by examples » de ANTONI ET AL ( mai 2009) décrit de façon générale et à base de plusieurs exemples l'application de la cyclostationnarité à un signal spectral.

La publication « Statistical Tests for Presence of Cyclostationarity » de DANDAWATE A V ET AL ( septembre 1994) décrit des tests statistiques pour établir la cyclostationnarité d'un signal temporel ou angulaire.

Par ailleurs, dans le cadre d'une surveillance vibratoire d'un système mécanique, la localisation des capteurs utilisés ainsi que leur direction de mesure sont importantes, voire essentielles pour permettre une détection fiable et efficace de défauts. En effet, un capteur peut effectuer des mesures dans une ou plusieurs directions privilégiées. L'orientation de ces directions privilégiées, et donc du capteur, par rapport à une référence du système mécanique peut donc influencer la précision et la fiabilité des mesures effectuées par le capteur.

Cependant, la localisation et l'orientation d'un capteur peuvent être considérées comme optimales à l'issue de tests préliminaires lors du développement d'un système mécanique, sans pour autant garantir que le capteur permettra d'obtenir des résultats similaires en utilisation. En effet, le signal mesuré et émis par le capteur peut s'avérer être sensible à des paramètres variant durant certaines phases de fonctionnement du système mécanique, et en particulier durant certaines phases de vol d'un aéronef, ou bien suite à des interventions de maintenance.

La présente invention a alors pour but de proposer un procédé et un dispositif visant à analyser un signal vibratoire relatif à un système mécanique comportant un organe tournant et à déterminer de façon alternative le risque de présence d'un défaut sur ce système mécanique.

La présente invention a aussi pour but de proposer un procédé et un dispositif visant à optimiser le positionnement et l'orientation de capteurs vibratoires sur un tel système mécanique à l'aide de cette analyse.

La présente invention a enfin pour but de proposer un procédé et un dispositif alternatif visant à surveiller un système mécanique comportant un organe tournant afin de détecter au plus tôt l'apparition d'un défaut suite à une telle analyse d'un signal vibratoire relatif à ce système mécanique.

La présente invention a tout d'abord pour objet un procédé de détermination de la cyclostationnarité d'un signal vibratoire relatif à un système mécanique, selon la revendication 1 ou 3, le système mécanique comportant au moins un organe tournant en rotation autour d'un axe AX de rotation, ainsi qu'un au moins un capteur vibratoire émettant un signal vibratoire temporel $s(t)$, un capteur angulaire émettant un signal angulaire temporel $\theta(t)$ variant en fonction d'une position angulaire de l'organe tournant autour de l'axe AX de rotation, et un calculateur.

Le ou les capteurs vibratoires permettent ainsi de mesurer des caractéristiques, telles des vibrations par exemple, du système mécanique dans son ensemble ou d'un ou de plusieurs de ses composants et d'émettre un signal vibratoire temporel, à savoir dans le domaine temporel, porteur d'une information relative à ces caractéristiques vers le calculateur par exemple. Le capteur angulaire permet de mesurer une position angulaire de l'organe tournant autour de l'axe AX de rotation, par rapport à une référence du système mécanique, par exemple un bâti ou un carter du système mécanique et d'émettre un signal angulaire temporel, à savoir dans le domaine temporel, porteur d'une information relative à cette position angulaire.

Un tel système mécanique peut comporter au moins un des éléments suivants : au moins un organe tournant tel un arbre d'entrée et/ou un arbre de sortie, un palier de guidage en rotation et par exemple un roulement muni d'éléments roulants, une roue dentée, un pignon, une couronne dentée. Un tel système mécanique peut par exemple être une boîte de vitesse ou une boîte de transmission de puissance d'un véhicule.

Le procédé selon l'invention comporte, entre autres, les étapes suivantes:

- transformation du signal vibratoire temporel $s(t)$ en un signal vibratoire angulaire $s(\theta)$, à l'aide du calculateur en fonction du signal angulaire temporel $\theta(t)$,
- calcul avec le calculateur d'un indicateur de cyclostationnarité $I_\alpha$ normalisé à l'aide d'un test statistique d'hypothèse et en fonction du signal vibratoire angulaire $s(\theta)$, et
- détermination que le signal vibratoire angulaire $s(\theta)$ est cyclostationnaire lorsque l'indicateur de cyclostationnarité $I_\alpha$ est supérieur ou égal à un seuil de cyclostationnarité prédéterminé, le seuil de cyclostationnarité prédéterminé étant compris entre 0 et 1.

Un capteur vibratoire, dans le cadre de l'invention, peut comporter par exemple un accéléromètre, un tachymètre, un capteur de type codeur mesurant une position angulaire d'un arbre, une jauge de contrainte ou autres. Un tel capteur vibratoire permet de mesurer des signaux vibratoires temporels, comportant par exemple des signaux d'accélérations ou des signaux de vitesses. Un tel capteur vibratoire peut être positionné à différentes positions dans le système mécanique et avec des orientations diverses. Un tel capteur vibratoire peut être positionné de préférence à proximité d'un organe tournant, par exemple à proximité d'un arbre d'entrée ou de sortie, ou d'un élément spécifique à surveiller, tel qu'un palier, une roue dentée, un pignon ou une couronne dentée par exemple. Le capteur vibratoire peut ainsi émettre un signal vibratoire temporel $s(t)$ porteur d'une information relative aux vibrations captées au cours du temps.

On entend par « position » l'endroit où est agencé le capteur vibratoire sur le système mécanique. On entend par « orientation » les angles d'une ou de plusieurs directions privilégiées de mesure du capteur vibratoire.

Le capteur angulaire peut quant à lui être positionné à proximité de l'organe tournant dont il doit mesurer la position angulaire. Le capteur angulaire peut ainsi émettre un signal angulaire temporel $\theta(t)$, porteur d'une information relative à la variation de cette position angulaire au cours du temps.

Le signal vibratoire temporel $s(t)$ et le signal angulaire temporel $\theta(t)$ peuvent être des signaux formés par des mesures brutes émises respectivement par le capteur vibratoire et le capteur angulaire ou par des mesures obtenues par un traitement de signal plus ou moins complexe effectué par le calculateur ou par un calculateur intégré au capteur correspondant à partir de telles mesures brutes, par exemple via un filtrage ou un échantillonnage usuel, voir l'application de transformations.

Le signal vibratoire temporel et le signal angulaire temporel peuvent être émis simultanément, voire de façon synchronisée.

Le signal vibratoire temporel $s(t)$, à savoir variant dans le domaine temporel et donc en fonction du temps, est transformé de façon connue en un signal vibratoire angulaire $s(\theta)$, à savoir variant dans un domaine angulaire, en fonction de la position angulaire de l'organe tournant concerné par rapport à une référence du système mécanique. Cette transformation comporte par exemple un rééchantillonnage angulaire du signal vibratoire temporel $s(t)$ dans le domaine angulaire et est effectuée par le calculateur à partir du signal vibratoire temporel $s(t)$, et du signal angulaire temporel $\theta(t)$.

Cette transformation du signal vibratoire temporel du domaine temporel au domaine angulaire permet avantageusement d'associer les variations du signal vibratoire aux positions angulaires de l'organe tournant du système mécanique, et donc à des positions des éléments du système mécanique. Cette transformation permet notamment d'extraire des propriétés statistiques périodiques pour les signaux vibratoires présentant des fluctuations de vitesse. En effet, la vitesse de rotation de l'organe tournant n'est pas systématiquement constante, en particulier lors de phases transitoires, par exemple lors du démarrage du système mécanique ou des changements de régimes et en cas de fortes sollicitations du système mécanique. De plus, en régime continu, la vitesse instantanée de rotation de l'organe tournant peut fluctuer légèrement et, de fait, dans le domaine temporel, le signal n'est pas strictement périodique alors que dans le domaine angulaire, il peut l'être et ses caractéristiques cyclostationnaires peuvent être évaluées.

Ainsi, de façon générale, un signal dans le domaine temporel présentant des propriétés statistiques constantes est dit « stationnaire ». Un signal dans le domaine angulaire présentant des propriétés statistiques périodiques est quant à lui dit « cyclostationnaire ». En particulier, un signal dans le domaine angulaire est cyclostationnaire à l'ordre $n$ si ses $n$ premiers moments statistiques d'ordre $n$ existent et sont périodiques. Un signal cyclostationnaire peut par exemple comporter un jumelage entre des signaux déterministes périodiques et un ou plusieurs phénomènes aléatoires.

Par ailleurs, de nombreux défauts apparaissant sur un système mécanique, et notamment sur un organe tournant, un engrenage ou un palier, se caractérisent par l'apparition d'une composante cyclostationnaire importante sur un signal vibratoire de ce système mécanique. A contrario, un signal vibratoire qui est uniquement stationnaire, à savoir ne comportant pas de composante cyclostationnaire, peut être considéré comme une forte incitation de l'absence de défaut sur un organe tournant, un engrenage ou un palier du système mécanique.

Les cyclostationnarités d'ordres 1 et 2 sont particulièrement intéressantes dans le cadre de la recherche de défaut sur un système mécanique. La cyclostationnarité d'ordre 1 désigné par l'acronyme « *CS1* » est en particulier adaptée à la surveillance spécifique des engrenages, tels que des roues dentées, des pignons ou des couronnes dentées, ainsi que des arbres tournants. La cyclostationnarité d'ordre 2 désigné par l'acronyme « *CS2* » est en particulier adaptée à la surveillance spécifique des paliers, et par exemple des roulements. En outre, un défaut complexe peut engendrer l'apparition simultanée des cyclostationnarités d'ordres 1 et 2.

Dans ce but, le procédé selon l'invention permet de calculer un indicateur de cyclostationnarité $I_\alpha$ relatif au signal vibratoire angulaire $s(\theta)$ à l'aide du calculateur. Cet indicateur de cyclostationnarité $I_\alpha$ est déterminé à l'aide d'un test statistique d'hypothèse et est normalisé à savoir compris entre 0 et 1.

Ainsi, un indicateur de cyclostationnarité $I_\alpha$, soit d'ordre 1 soit d'ordre 2, égal à 0 peut traduire une absence quasi-totale de composante de cyclostationnarité du même ordre que celui de l'indicateur $I_\alpha$ dans le signal vibratoire angulaire $s(\theta)$. Un indicateur de cyclostationnarité $I_\alpha$, soit d'ordre 1 soit d'ordre 2, égal à 1 peut quant à lui traduire une présence quasi-certaine de composantes de cyclostationnarité du même ordre que celui de l'indicateur $I_\alpha$ dans le signal vibratoire angulaire $s(\theta)$.

Il convient toutefois de noter que la présence quasi-certaine de composantes de cyclostationnarité dans le signal vibratoire angulaire $s(\theta)$ ne signifie pas la présence systématique d'un défaut. En effet, si la présence d'un défaut génère l'apparition de composante cyclostationnaire, d'autres phénomènes peuvent provoquer également l'apparition de composantes cyclostationnaire dans le signal vibratoire angulaire $s(\theta)$. L'apparition de composantes cyclostationnaires peut être due, aussi bien lors de régimes stabilisés que de régimes transitoires, à des fluctuations de certains paramètres du système mécanique tels que le couple sur un organe tournant ou la charge reliée au système mécanique.

A ce titre, le procédé de détermination de la cyclostationnarité d'un signal vibratoire selon l'invention ne se substitue pas à un procédé de détection de défaut, mais permet uniquement de déterminer la présence de composantes cyclostationnaires susceptible d'être provoquée par l'apparition d'un défaut sur le système mécanique.

Ensuite, l'indicateur de cyclostationnarité $I_\alpha$ est comparé à un seuil de cyclostationnarité prédéterminé compris entre 0 et 1. Ce seuil de cyclostationnarité peut avoir été prédéterminé suite à des essais, par exemple sur des systèmes mécaniques sans défaut et sur des systèmes mécaniques avec défauts, ou des simulations. Ce seuil de cyclostationnarité traduit les conditions selon lesquelles un signal vibratoire peut être considéré comme étant cyclostationnaire.

Un signal vibratoire angulaire $s(\theta)$ est alors considéré comme étant cyclostationnaire du même ordre que celui de l'indicateur $I_\alpha$, lorsque l'indicateur de cyclostationnarité $I_\alpha$ est supérieur ou égal au seuil de cyclostationnarité. A contrario, le signal vibratoire angulaire $s(\theta)$ peut être considéré comme étant non cyclostationnaire, lorsque l'indicateur de cyclostationnarité $I_\alpha$ d'ordre 1 et l'indicateur de cyclostationnarité $I_\alpha$ d'ordre 2, sont inférieurs au seuil de cyclostationnarité.

De la sorte, la présente invention permet, avant de déterminer un indicateur de surveillance, de vérifier, à l'aide de l'indicateur de cyclostationnarité $I_\alpha$, la présence d'une composante cyclostationnaire significative sur le signal vibratoire temporel $s(t)$ émis par le capteur vibratoire du système mécanique, qui peut éventuellement être un premier signe du risque d'apparition d'un défaut sur le système mécanique.

Le procédé selon l'invention peut comporter une ou plusieurs des caractéristiques qui suivent, prises seules ou en combinaison.

Selon un exemple, le procédé selon l'invention peut comporter au moins une étape supplémentaire parmi une génération d'une alerte de cyclostationnarité et une génération d'une alerte de non cyclostationnarité.

Ainsi, au cours de la génération d'une alerte de cyclostationnarité, une alerte de cyclostationnarité est générée lorsque l'indicateur de cyclostationnarité $I_\alpha$ est supérieur ou égal au seuil de cyclostationnarité, alors qu'au cours de la génération d'une alerte de non cyclostationnarité, une alerte de non cyclostationnarité est générée lorsque ledit indicateur de cyclostationnarité $I_\alpha$ est inférieur audit seuil de cyclostationnarité.

Les alertes de cyclostationnarité et de non cyclostationnarité peuvent être sonores, visuelles, voire haptiques. De la sorte, un opérateur du système mécanique peut être informé de la cyclostationnarité ou de la non cyclostationnarité du signal vibratoire.

L'opérateur sait ainsi, si le signal vibratoire est cyclostationnaire, qu'il y a un risque potentiel de présence d'un défaut sur le système mécanique, et il peut alors engager par exemple un procédé de surveillance du système mécanique et/ou de détection de défaut afin de confirmer ou infirmer ce risque.

Inversement, en cas de non cyclostationnarité du signal vibratoire, à savoir en l'absence d'une composante cyclostationnaire d'ordre 1 et d'une composante cyclostationnaire ordre 2, l'opérateur sait que le risque de présence du défaut spécifique recherché est faible, voire nulle, et il peut utiliser le système mécanique en toute sécurité vis à vis du risque engendré par l'occurrence d'apparition du défaut spécifique recherché.

Selon une réalisation, le procédé est dédié à une détermination de cyclostationnarité d'ordre 1, et le test statistique d'hypothèse est un test de Student appliqué à une estimation $\hat{m}(\theta)$ d'une moyenne synchrone du signal vibratoire angulaire $s(\theta)$ par rapport à une période cyclique $\Phi$ et le calcul d'un indicateur de cyclostationnarité $I_\alpha$ comporte une étape intermédiaire de détermination d'un indicateur statistique $\eta_\alpha(\theta)$ calculé selon la relation suivante :

$$\eta_\alpha(\theta) = t_\alpha^{K-1} . \frac{\hat{\sigma}(\theta)}{\sqrt{K}} \, ,$$

où $t_\alpha^{K-1}$ est la moitié d'un intervalle de confiance associé au test de Student à *K-1* degrés de liberté avec un risque 1 - $\alpha$,

$\hat{\sigma}(\theta)$ est une estimation de l'écart type du signal vibratoire angulaire $s(\theta)$ répondant à une loi normale pour un angle $\theta$

défini tel que $\hat{\sigma}(\theta) = \sqrt{\widehat{vs}(\theta). \frac{K}{K-1}} \, ,$

$\theta$ est la position angulaire de l'organe tournant autour de l'axe AX de rotation,

$\widehat{vs}(\theta)$ est une estimation de la variance synchrone du signal vibratoire angulaire $s(\theta)$ par rapport à la période cyclique $\Phi$, telle que

$$\widehat{vs}(\theta) = \frac{1}{K}\sum_{i=}^{K-}[\hat{r}(\theta + i.\Phi)]^2,$$

$\hat{r}(\theta)$ est une estimation d'un résidu du signal vibratoire angulaire $s(\theta)$ tel que $\hat{r}(\theta) = s(\theta) - \hat{m}(\theta)$.

$\hat{m}(\theta)$ est l'estimation de la moyenne synchrone par rapport à la période cyclique $\Phi$ telle que

$$\hat{m}(\theta) = \frac{1}{K}\sum_{i=}^{K-} s(\theta + i.\Phi) \, ,$$

$\sqrt{}$ est la fonction racine carré,

$\Sigma$ est la fonction somme,

$\Phi$ est la période cyclique du signal vibratoire angulaire $s(\theta)$,

$K$ est un nombre de cycles tel que $K = \frac{N}{\Phi} \, ,$

$N$ est un nombre de points d'échantillonnage formant le signal vibratoire angulaire $s(\theta)$, et

$i$ est un nombre entier variant de 0 à ($K$-1).

Ce cas peut correspondre, par exemple, à la surveillance spécifique des engrenages, tels que des roues dentées, des pignons ou des couronnes dentées, ainsi que d'arbres tournants.

Le test de Student permet de tester et vérifier l'hypothèse de normalité du phénomène vibratoire pour chaque angle $\theta$ de l'organe tournant autour de l'axe AX de rotation.

L'indicateur statistique $\eta_\alpha(\theta)$ est déterminé en prenant, dans le test de Student, un risque 1 - $\alpha$ que le signal vibratoire angulaire $s(\theta)$ soit à tort considéré comme étant non cyclostationnaire alors qu'il est cyclostationnaire, ou inversement ce risque 1 - $\alpha$ est associé à un intervalle de confiance de largeur $\pm t_\alpha^{K-1}$, $t_\alpha^{K-1}$ étant le quantile pour la loi de Student avec *K-1* degrés de liberté.

Ainsi, le procédé permet de déterminer pour chaque angle $\theta$, si le signal vibratoire est cyclostationnaire ou non en comparant l'estimation $\hat{m}(\theta)$ de la moyenne synchrone avec l'indicateur statistique $\eta_\alpha(\theta)$. Si l'estimation $\hat{m}(\theta)$ de la moyenne synchrone est supérieure à l'indicateur statistique $\eta_\alpha(\theta)$, le signal vibratoire peut être considéré comme étant cyclostationnaire pour cet angle $\theta$. Inversement, si l'estimation $\hat{m}(\theta)$ de la moyenne synchrone est inférieure ou égale à l'indicateur statistique $\eta_\alpha(\theta)$, le signal vibratoire peut être considéré comme n'étant pas cyclostationnaire pour cet angle $\theta$.

Il convient ensuite de vérifier si le signal vibratoire est globalement cyclostationnaire, à savoir sur la plage de variation de l'angle $\theta$ afin de conclure sur un potentiel risque de présence d'un défaut sur le système mécanique.

Dans ce but, le calcul de l'indicateur de cyclostationnarité $I_\alpha$ relatif à l'estimation $\hat{m}$ de la moyenne synchrone peut alors être déterminé par le rapport de la somme, sur la plage de variation de l'angle $\theta$ des valeurs absolues des estimations

$\hat{m}(\theta)$ de la moyenne synchrone répondant au critère de cyclostationnarité, à savoir supérieure à l'indicateur statistique $\eta_\alpha$ $(\theta)$, par la somme des valeurs absolues de toutes les estimations $\hat{m}(\theta)$ de la moyenne synchrone sur la plage de variation de l'angle $\theta$.

L'indicateur de cyclostationnarité $I_\alpha$ peut donc s'écrire selon la relation suivante $I_\alpha = \frac{\sum_\theta\left(|\hat{m}(\theta)|.\mathcal{J}_{Cyc}(\theta)\right)}{\sum_\theta|\hat{m}(\theta)|}$.

$\mathcal{J}_{Cyc}(\theta)$ est une fonction indicatrice de la cyclostationnarité du signal vibratoire angulaire $s(\theta)$ qui est égale à 1 si $\hat{m}(\theta) > \eta_\alpha(\theta)$ et égale à 0 si $\hat{m}(\theta) \le \eta_\alpha(\theta)$, et $\|$ est la fonction valeur absolue.

Cet indicateur de cyclostationnarité $I_\alpha$ est normalisé et traduit un taux de cyclostationnarité du signal vibratoire sur la plage de variation de l'angle $\theta$. Cet indicateur de cyclostationnarité $I_\alpha$ peut alors être comparé au seuil de cyclostationnarité pour déterminer si le signal vibratoire angulaire $s(\theta)$ peut être considéré comme étant cyclostationnaire ou non sur la plage de variation de l'angle $\theta$. Le seuil de cyclostationnarité correspond ainsi à un taux de cyclostationnarité minimum pour considérer le signal vibratoire angulaire $s(\theta)$ comme étant cyclostationnaire, à savoir qu'il comporte un nombre significatif de composantes cyclostationnaires sur la plage de variation de l'angle $\theta$.

Selon une réalisation, le procédé est dédié à une détermination de cyclostationnarité d'ordre 2, le test statistique d'hypothèse est un test de Bartlett appliqué à une estimation $\widehat{vs}$ d'une variance synchrone du signal vibratoire angulaire $s(\theta)$ par rapport à une période cyclique $\Phi$ et l'indicateur de cyclostationnarité $I_\alpha$ est calculé selon la relation suivante :

$$I_\alpha = exp\left(-\frac{\chi_\alpha^2}{\psi}\right),$$

où $exp$ est la fonction mathématique exponentielle.

$\psi$ est un scalaire déterminé en fonction de l'estimation $\widehat{vs}$ de la variance synchrone du signal vibratoire angulaire $s$ $(\theta)$ telle que : $\psi = \frac{3N.(K-1).\left[ln(\sum_{n=1}^N \widehat{vs}(\theta_n)/N) - \sum_{n=1}^N ln(\widehat{vs}(\theta_n))/N\right]}{3N.(K-1)+N+1}$,

$\widehat{vs}(\theta)$    est l'estimation de la variance synchrone par rapport à la période cyclique $\Phi$, telle que $\widehat{vs}(\theta) = \frac{1}{K}\sum_{i=0}^{K-1}[\hat{r}(\theta + i.\Phi)]^2$,

$\hat{r}(\theta)$ est une estimation d'un résidu du signal vibratoire angulaire $s(\theta)$ tel que $\hat{r}(\theta) = s(\theta) - \hat{m}(\theta)$,

$\hat{m}(\theta)$ est une estimation de la moyenne synchrone du signal vibratoire angulaire $s(\theta)$ par rapport à la période cyclique $\Phi$, telle que $\hat{m}(\theta) = \frac{1}{K}\sum_{i=0}^{K-1}s(\theta + i.\Phi)$,

$\Sigma$ est la fonction somme,

$\theta$ est la position angulaire de l'organe tournant autour de l'axe AX de rotation,

$\Phi$ est la période cyclique du signal vibratoire angulaire $s(\theta)$,

$K$ est un nombre de cycles, tel que $K = \frac{N}{\Phi}$,

$N$ est un nombre de points d'échantillonnage formant le signal vibratoire angulaire $s(\theta)$,

$i$ est un nombre entier variant de 0 à $(K\text{-}1)$,

$ln$ est la fonction logarithme népérien, et $\chi_\alpha^2$, un intervalle de confiance associé à une loi de Khi-deux à $(N\text{-}1)$ degrés de liberté avec un risque 1 - $\alpha$

Ce cas peut correspondre par exemple à la surveillance spécifique des paliers, et en particulier des roulements. L'indicateur de cyclostationnarité $I_\alpha$ est dans ce cas calculé en fonction de la variance synchrone du signal vibratoire angulaire $s(\theta)$.

Le test de Bartlett permet de comparer les $N$ variances issues de $N$ distributions normales des $K$ échantillons des $K$ cycles du signal vibratoire angulaire $s(\theta)$, en prenant en compte globalement la variance synchrone du signal vibratoire angulaire $s(\theta)$, au contraire d'un test de Fisher qui ne compare les échantillons que 2 à 2.

Le scalaire $\psi$ est déterminé pour toute la plage de variation de l'angle $\theta$, notamment en fonction de l'estimation $\widehat{vs}$ de la variance synchrone du signal vibratoire angulaire $s(\theta)$ et suit une loi de Khi-deux $X^2$ à $N\text{-}1$ degrés de liberté permettant de déterminer l'intervalle de confiance $\chi_\alpha^2$, correspondant au quantile pour la loi Khi-deux et associé avec un risque 1 - $\alpha$ que le signal vibratoire angulaire $s(\theta)$ soit à tort considéré comme étant non cyclostationnaire alors qu'il est cyclostationnaire, ou inversement.

L'indicateur de cyclostationnarité $I_\alpha$ est déterminé dans ce cas directement sur la totalité de la plage de variation de l'angle $\theta$, et peut être comparé au seuil de cyclostationnarité pour déterminer si le signal vibratoire est globalement cyclostationnaire.

La présente invention vise également un procédé d'agencement pour agencer au moins un capteur vibratoire dédié à une surveillance d'un système mécanique, le système mécanique comportant au moins un organe tournant en rotation autour d'un axe AX de rotation, au moins un capteur vibratoire, un capteur angulaire, et un calculateur,

Ce procédé d'agencement comporte les étapes suivantes réalisées au cours d'au moins deux itérations successives :

- positionnement et orientation dudit au moins un capteur vibratoire sur le système mécanique, ledit au moins un capteur vibratoire étant situé à une position et/ou une orientation différente à chaque itération,
- émission d'un signal vibratoire temporel $x(t)$ par ledit au moins un capteur vibratoire pour différents régimes de fonctionnement du système mécanique,
- émission d'un signal angulaire temporel $\theta(t)$ par le capteur angulaire variant en fonction d'une position angulaire de l'organe tournant autour de l'axe AX de rotation pour les différents régimes de fonctionnement du système mécanique, et
- calcul d'un indicateur de cyclostationnarité $I_\alpha$ relatif au signal vibratoire temporel $x(t)$ pour les différents régimes de fonctionnement du système mécanique, en appliquant le procédé de détermination de la cyclostationnarité précédemment décrit.

Ce procédé d'agencement comporte également une étape de validation de la position et de l'orientation dudit au moins un capteur vibratoire sur le système mécanique, au cours de laquelle la position et l'orientation dudit au moins un capteur vibratoire sont validées si une valeur caractéristique des indicateurs de cyclostationnarité relatifs à la position et à l'orientation dudit au moins un capteur vibratoire pour les différents régimes de fonctionnement du système mécanique est supérieur à un seuil de validation, la valeur caractéristique étant choisie parmi une valeur médiane des indicateurs de cyclostationnarité, une moyenne arithmétique des indicateurs de cyclostationnarité ou une moyenne quadratique des indicateurs de cyclostationnarité.

L'étape de positionnement dudit au moins un capteur vibratoire sur le système mécanique, les deux étapes d'émission de signaux et l'étape de calcul de l'indicateur de cyclostationnarité $I_\alpha$ sont répétées au moins deux fois, voire de nombreuses fois afin de tester plusieurs positions et plusieurs orientations dudit au moins un capteur sur le système mécanique et de déterminer les indicateurs de cyclostationnarité $I_\alpha$ relatifs respectivement à divers agencements définissant chacun une position et une orientation.

Entre deux itérations, le ou les capteurs vibratoires sont déplacés en changeant leur position et/ou leur orientation, par exemple sur un organe tournant, un palier, une couronne dentée ou d'une roue dentée.

Ainsi, à chaque agencement comprenant une position et une orientation d'un capteur vibratoire peut être associé un ensemble de valeurs d'indicateurs de cyclostationnarité $I_\alpha$ relatifs respectivement à différents régimes du système mécanique. On entend par « régime du système mécanique » un fonctionnement du système mécanique avec une vitesse de rotation spécifique d'un organe ou un couple spécifique sur l'organe tournant ou des efforts spécifiques appliqués à l'organe tournant. Deux régimes distincts peuvent produire une même vitesse de rotation de l'organe tournant mais des couples différents. Similairement, deux régimes distincts peuvent produire des vitesses de rotation différentes de l'organe tournant mais des couples identiques. Par contre, deux régimes distincts ne peuvent pas produire une même vitesse de rotation de l'organe tournant et un même couple.

Ensuite, ces indicateurs de cyclostationnarité $I_\alpha$ sont comparés à un seuil de validation, afin d'identifier et de valider la position et l'orientation dudit au moins un capteur vibratoire sur le système mécanique permettant d'obtenir des mesures fiables et exploitables, et par suite d'assurer une surveillance vibratoire efficace du système mécanique.

En particulier, les valeurs caractéristiques des indicateurs de cyclostationnarité $I_\alpha$ relatifs à divers agencements définissant chacun une position et à une orientation dudit au moins un capteur vibratoire pour les différents régimes de fonctionnement du système mécanique sont comparées à ce seuil de validation. La valeur caractéristique peut être choisie parmi une valeur médiane des indicateurs de cyclostationnarité $I_\alpha$, à savoir pour laquelle le nombre d'indicateurs de cyclostationnarité $I_\alpha$ qui sont supérieurs à cette valeur médiane est égal au nombre d'indicateurs de cyclostationnarité $I_\alpha$ qui sont inférieurs à cette valeur médiane, une moyenne arithmétique des indicateurs de cyclostationnarité $I_\alpha$ ou une moyenne quadratique des indicateurs de cyclostationnarité $I_\alpha$ par exemple.

Chaque agencement du capteur vibratoire pour lequel la valeur caractéristique des indicateurs de cyclostationnarité $I_\alpha$ est supérieure au seuil de validation est donc validé, plusieurs agencements pouvant donc être validés. Le seuil de validation est par exemple égal à 0.6.

La position et l'orientation du capteur vibratoire 20 relatives à chaque agencement validé peut par exemple être stockées dans une mémoire afin de pourvoir être utilisées lors de la fabrication de tels systèmes mécaniques 10 pour positionner et orienter chaque capteur vibratoire 20.

La normalisation de l'indicateur de cyclostationnarité $I_\alpha$ permet avantageusement de comparer efficacement et de façon fiable les valeurs de l'indicateur de cyclostationnarité $I_\alpha$ quelles que soient les positions et/ou les orientations des capteurs vibratoires, bien que les signaux vibratoires fournis par ces capteurs vibratoires puissent être significativement différents.

Ce procédé d'agencement constitue donc une aide précieuse à la recherche de la position et de l'orientation optimales d'un capteur vibratoire dédié à la surveillance d'un système mécanique lors du développement et d'essais de ce système mécanique. Ce procédé d'agencement permet ainsi de s'assurer que le signal vibratoire temporel acquis par ce capteur vibratoire lors du fonctionnement définitif du système mécanique soit fiable et valide pour une surveillance vibratoire robuste du système mécanique.

Le procédé selon l'invention peut comporter une ou plusieurs des caractéristiques qui suivent, prises seules ou en combinaison.

Selon un exemple, lors de l'étape de validation, la position et de l'orientation dudit au moins un capteur vibratoire peuvent être validées si une différence entre une valeur maximale et une valeur minimale des indicateurs de cyclostationnarité $I_\alpha$ relatifs à cette position et cette orientation est également inférieure à un seuil de différence. Le seuil de différence peut par exemple être égal à un pourcentage de la valeur caractéristique des indicateurs de cyclostationnarité $I_\alpha$. Ce pourcentage est par exemple égal à 25%. Ce critère de validation permet ainsi d'exclure une position ou une orientation d'un capteur vibratoire qui fournirait des mesures très différentes d'un régime à l'autre, et par suite, peu fiables et peu exploitables.

Quels que soient le ou les critères de validation utilisés, plusieurs agencements regroupant une position ou une orientation d'un capteur vibratoire peuvent être validés. Si plusieurs agencements sont validés, le choix de la position et de l'orientation du capteur vibratoire peut être fait selon l'agencement ayant la marge la plus importante par rapport à un de ces seuils. De façon complémentaire ou alternative, si plusieurs agencements sont validés, le choix de la position et de l'orientation du capteur vibratoire peut être fait selon la facilité à mettre en place le capteur, par exemple en termes d'accessibilité et/ou le faible risque qu'il soit impacté par d'autres organes du système mécanique. Par exemple, l'agencement choisi peut être celui dont la valeur caractéristique des indicateurs de cyclostationnarité $I_\alpha$ est la plus grande, en l'occurrence la plus proche de 1. Alternativement ou de façon complémentaire, l'agencement choisi peut être celui dont la différence entre la valeur maximale et la valeur minimale des indicateurs de cyclostationnarité $I_\alpha$ est la plus faible.

Par ailleurs et quels que soient le ou les critères de validation de la position et de l'orientation du capteur vibratoire utilisés, les différents régimes de fonctionnement du système mécanique peuvent comporter uniquement des régimes stabilisés. De la sorte, les régimes transitoires sont exclus des mesures effectuées par ledit au moins un capteur vibratoire pour chacune de ses positions et orientations.

Alternativement ou de façon complémentaire, un filtre peut être appliqué aux valeurs des indicateurs de cyclostationnarité $I_\alpha$ afin de retirer les valeurs extrêmes et/ou les valeurs aberrantes susceptibles de correspondre aux régimes transitoires ou à des régimes particuliers.

Selon un autre exemple compatible avec les précédents, le procédé selon l'invention peut comporter une étape d'agencement d'au moins un capteur vibratoire sur le système mécanique selon un agencement validé définissant une position et une orientation. Ainsi, le système mécanique est équipé d'un ou de plusieurs capteurs vibratoires dont la position et l'orientation ont été testées et validées afin de permettre une surveillance fiable et efficace du système mécanique à l'aide d'un ou de plusieurs indicateurs de surveillance déterminés en fonction de signaux vibratoires temporels émis par ce ou ces capteurs vibratoires.

La présente invention vise aussi un procédé de surveillance d'un système mécanique, le système mécanique comportant au moins un organe tournant en rotation autour d'un axe AX de rotation, au moins un capteur vibratoire émettant un signal vibratoire temporel $s(t)$, un capteur angulaire émettant un signal angulaire temporel $\theta(t)$ variant en fonction d'une position angulaire de l'organe tournant autour de l'axe AX de rotation et un calculateur.

Le procédé comporte les étapes suivantes :

- émission du signal vibratoire temporel $s(t)$ par ledit au moins un capteur vibratoire,
- émission du signal angulaire temporel $\theta(t)$ par le capteur angulaire,
- calcul d'un indicateur de cyclostationnarité $I_\alpha$ pour le signal vibratoire temporel $s(t)$, en appliquant le procédé de détermination de la cyclostationnarité précédemment décrit,
- si l'indicateur de cyclostationnarité $I_\alpha$ est supérieur ou égal au seuil de cyclostationnarité, calcul d'au moins un indicateur de surveillance du système mécanique à l'aide du calculateur en fonction du signal vibratoire temporel $s(t)$, et
- détermination d'une présence d'un défaut sur le système mécanique selon une comparaison dudit au moins un indicateur de surveillance avec un seuil de défaut.

**10**

Ainsi, après la mesure et l'émission du signal vibratoire temporel $s(t)$ par ledit au moins un capteur vibratoire et la mesure et l'émission du signal vibratoire temporel $\theta(t)$ par le capteur angulaire, les étapes du procédé de détermination de la cyclostationnarité du signal vibratoire temporel $s(t)$ sont réalisées afin de vérifier la cyclostationnarité de ce signal vibratoire temporel $s(t)$.

De la sorte, le signal vibratoire temporel $s(t)$ est analysé et l'indicateur de cyclostationnarité $I_{\alpha}$ relatif à ce signal vibratoire temporel $s(t)$ est calculé, puis la cyclostationnarité ou la non cyclostationnarité de ce signal vibratoire temporel $s(t)$ est déterminé.

Si la cyclostationnarité du signal vibratoire temporel $s(t)$ est confirmé, à savoir si l'indicateur de cyclostationnarité $I_{\alpha}$ est supérieur ou égal au seuil de cyclostationnarité, alors le signal vibratoire temporel $s(t)$ est susceptible de comporter des signes d'apparition d'un défaut sur le système mécanique. En conséquence, au moins un indicateur de surveillance peut alors être déterminé en fonction de ce signal vibratoire temporel $s(t)$ afin d'être utilisé avec confiance pour la surveillance du système mécanique.

A contrario, si la non cyclostationnarité du signal vibratoire temporel $s(t)$ est confirmée, à savoir si l'indicateur de cyclostationnarité $I_{\alpha}$ est inférieur au seuil de cyclostationnarité, aucun indicateur de surveillance du système mécanique n'est calculé en fonction de ce signal vibratoire temporel $s(t)$, le signal vibratoire temporel $s(t)$ ne comportant aucun signe d'apparition d'un défaut sur le système mécanique.

Ce procédé permet ainsi avantageusement de déterminer un indicateur de surveillance robuste susceptible de détecter efficacement et de façon fiable des défauts sur le système mécanique, tout en excluant préalablement les signaux vibratoires qui seraient probablement stationnaires et donc non représentatifs de la présence potentielle de défauts.

La présence d'un défaut sur le système mécanique peut par exemple être effective si un indicateur de surveillance est supérieur au seuil de défaut.

Un tel indicateur de surveillance peut par exemple être calculé en fonction du signal vibratoire temporel $s(t)$ ou du signal vibratoire angulaire $s(\theta)$. Un tel indicateur de surveillance peut aussi être calculé en fonction de l'indicateur de cyclostationnarité $I_{\alpha}$, voire être égal à l'indicateur cyclostationnarité $I_{\alpha}$.

Un exemple non couvert par le texte des revendications concerne un programme d'ordinateur comprenant des instructions qui, lorsque le programme est exécuté, conduisent celui-ci à mettre en œuvre un des procédés précédemment décrits. Le programme d'ordinateur peut par exemple être exécuté par un calculateur. Les instructions sont par exemple stockées dans une mémoire du calculateur ou reliée au calculateur.

La présente invention vise également un dispositif de détermination d'une cyclostationnarité pour valider si un signal vibratoire temporel $x(t)$ relatif à un système mécanique est cyclostationnaire, selon la revendication 12. Un tel dispositif de validation est destiné et configuré pour un système mécanique comportant au moins un organe tournant en rotation autour d'un axe AX de rotation et au moins un capteur vibratoire émettant le signal vibratoire temporel $x(t)$. Le dispositif de détermination d'une cyclostationnarité comporte un capteur angulaire émettant un signal angulaire temporel $\theta(t)$ variant en fonction d'une position angulaire de l'organe tournant autour de l'axe AX de rotation, et un calculateur.

Ce dispositif de détermination d'une cyclostationnarité est configuré pour la mise en œuvre du procédé de détermination d'une cyclostationnarité tel que précédemment décrit.

La présente invention vise aussi un dispositif d'agencement d'au moins un capteur vibratoire dédié à une surveillance d'un système mécanique, selon la revendication 13, le système mécanique comportant au moins un organe tournant en rotation autour d'un axe AX de rotation, au moins un capteur vibratoire. Le dispositif d'agencement comporte un capteur angulaire émettant un signal angulaire temporel $\theta(t)$ variant en fonction d'une position angulaire de l'organe tournant autour d'un axe AX de rotation et un calculateur,

Ce dispositif d'agencement est configuré pour la mise en œuvre du procédé d'agencement précédemment décrit.

Le dispositif d'agencement est en particulier configuré pour mettre en œuvre, lors d'au moins deux itérations, après avoir préalablement positionné et orienté ledit au moins un capteur vibratoire sur le système mécanique, les étapes d'émission d'un signal vibratoire temporel $s(t)$ par ledit au moins un capteur vibratoire pour différents régimes de fonctionnement du système mécanique, d'émission d'un signal angulaire temporel $\theta(t)$ par le capteur angulaire et de calcul d'un indicateur de cyclostationnarité $I_{\alpha}$ du procédé d'agencement. Ledit au moins un capteur vibratoire est situé à une position et/ou une orientation différente à chaque itération. Ensuite, le dispositif d'agencement peut mettre en œuvre l'étape de validation de la position et de l'orientation dudit au moins un capteur vibratoire de ce procédé d'agencement.

La présente invention vise également un dispositif de surveillance pour surveiller un système mécanique, selon la revendication 14, le dispositif de surveillance étant configuré pour surveiller un système mécanique comportant au moins un organe tournant en rotation autour d'un axe AX de rotation. Le dispositif de surveillance comporte au moins un capteur vibratoire mesurant le signal vibratoire temporel $s(t)$, un capteur angulaire mesurant une position angulaire temporel $\theta(t)$ de l'organe tournant autour d'un axe AX de rotation et un calculateur. Ce dispositif de surveillance est configuré pour la mise en œuvre du procédé de surveillance d'un système mécanique tel que précédemment décrit et ainsi détecter la présence d'un défaut sur un système mécanique. La présente invention vise encore un système mécanique comportant au moins un organe tournant en rotation autour d'un axe AX de rotation et un dispositif de surveillance tel que précédemment décrit pour surveiller le système mécanique et détecter la présence d'un défaut sur le système mécanique.

Ce système mécanique peut par exemple être une boîte de transmission de puissance d'un véhicule, et d'un aéronef en particulier.

La présente invention vise également une boîte de transmission de puissance comportant un système mécanique tel que précédemment décrit.

La boîte de transmission de puissance peut par exemple équiper un véhicule et être insérée entre au moins un moteur, thermique ou électrique, et au moins un rotor d'un aéronef.

La présente invention peut enfin viser un véhicule comportant un système mécanique et/ou une boîte de transmission de puissance, en particulier un aéronef.

L'invention et ses avantages apparaîtront avec plus de détails dans le cadre de la description qui suit avec des exemples donnés à titre illustratif en référence aux figures annexées qui représentent :

- la figure 1, une vue schématique de côté d'un aéronef,
- la figure 2, un schéma illustrant un procédé de détermination de la cyclostationnarité d'un signal vibratoire temporel relatif à un système mécanique,
- la figure 3, un schéma illustrant un procédé d'agencement d'au moins un capteur vibratoire dédié à une surveillance d'un système mécanique,
- la figure 4, un diagramme illustrant le processus d'analyse vibratoire d'un système mécanique incluant l'invention, et
- la figure 5, un schéma illustrant un procédé de surveillance d'un système mécanique.

Les éléments présents dans plusieurs figures distinctes sont affectés d'une seule et même référence.

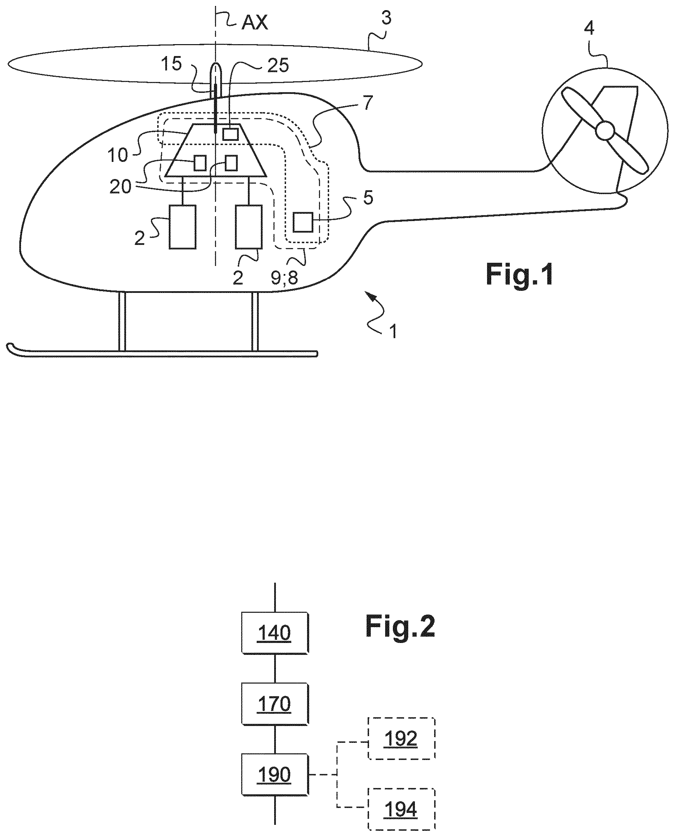

La figure 1 représente un véhicule 1, et un aéronef à voilure tournante de type giravion en particulier. Ce véhicule 1 comporte un système mécanique 10 muni d'un ou plusieurs organes tournants 15 tournant autour d'un axe AX de rotation. Un organe tournant 15 peut par exemple comporter un arbre de sortie ou un arbre d'entrée.

Un tel système mécanique 10 peut comporter un ou plusieurs paliers de guidage en rotation par exemple pour le guidage en rotation d'au moins un organe tournant. Un palier comporte par exemple un roulement muni d'éléments roulants.

Un tel système mécanique 10 peut aussi comporter par exemple au moins une roue dentée, un pignon, une couronne dentée, fixe ou mobile.

Ce système mécanique 10 peut être par exemple une boîte de vitesse ou une boîte de transmission de puissance de l'aéronef 1 à voilure tournante. Ce système mécanique 10 peut être relié par exemple à un ou plusieurs moteurs 2, via respectivement un ou plusieurs arbres d'entrées et peut entraîner en rotation un rotor, tel que par exemple un rotor principal 3 via un arbre de sortie, voire éventuellement un rotor auxiliaire 4 comme représenté sur la figure 1.

Alternativement, un tel système mécanique 10 peut être agencé dans une boîte de vitesse ou une boîte de transmission de puissance d'un véhicule 1 ou tout autre équipement mécanique.

Quel que soit son agencement, le système mécanique 10 comprend aussi un ou plusieurs capteurs vibratoires 20, un capteur angulaire 25 mesurant une position angulaire d'un organe tournant 15 autour d'un axe AX de rotation et un calculateur 5. Le système mécanique 10 peut comporter plusieurs capteurs angulaires 25 agencés respectivement sur plusieurs organes tournants 15 distincts.

Chaque capteur vibratoire 20 peut mesurer et/ou émettre un signal vibratoire temporel $s(t)$ relatif à un comportement vibratoire du système mécanique 10 dans son ensemble, ou à un comportement vibratoire particulier d'un organe tournant 15, d'un palier ou encore d'un engrenage par exemple. Un capteur vibratoire 20 peut émettre un signal vibratoire temporel $s(t)$ sous forme électrique ou optique, analogique ou numérique. Le signal vibratoire temporel $s(t)$ est porteur d'informations relatives à un comportement vibratoire du système mécanique 10 ou d'un de ses composants. Le signal vibratoire temporel $s(t)$ peut être transmis, par une liaison filaire ou sans fil, au calculateur 5. Le ou les capteurs vibratoires 20 peuvent comporter par exemple un accéléromètre un tachymètre, un capteur de type codeur et/ou une jauge de contrainte.

Le capteur angulaire 25 mesure une position angulaire d'un organe tournant 15 autour d'un axe AX de rotation. La position angulaire de l'organe tournant 15 autour d'un axe AX de rotation peut être définie par rapport à un référentiel du système mécanique 10, par exemple un carter du système mécanique 10. Le capteur angulaire 25 peut émettre le signal angulaire temporel $\theta(t)$ sous forme électrique ou optique, analogique ou numérique. Le signal angulaire temporel $\theta(t)$ peut être porteur, d'informations relatives à la position angulaire d'un organe tournant 15 autour d'un axe AX de rotation et peut être transmis, par une liaison filaire ou sans fil, au calculateur 5.

Le capteur angulaire 25 peut comporter un capteur de position angulaire mesurant directement un signal angulaire temporel indiquant la variation de la position angulaire de l'organe tournant 15 en fonction du temps.

Alternativement, le capteur angulaire 25 peut comporter un capteur de vitesse angulaire ou un capteur d'accélération angulaire mesurant un signal angulaire temporel relatif respectivement à une vitesse angulaire ou à une accélération angulaire devant subir une simple intégration ou une double intégration, afin de générer un signal angulaire temporel fournissant la variation de la position angulaire de l'organe tournant 15 en fonction du temps. Cette simple ou double intégration peut être réalisée par le calculateur 5, le capteur angulaire 25 transmettant par une liaison filaire ou sans fil le signal angulaire temporel mesuré au calculateur 5 sous la forme d'un signal électrique ou optique, analogique ou numérique. Cette simple ou double intégration peut aussi être réalisée par un calculateur intégré au capteur angulaire 25.

Le signal vibratoire temporel $s(t)$ et le signal angulaire temporel $\theta(t)$ sont par exemple mesurés en permanence pendant le fonctionnement du système mécanique 10.

Le signal vibratoire temporel $s(t)$ et le signal angulaire temporel $\theta(t)$ sont également mesurés sur des périodes de durées de mesure fixes ou variables pendant le fonctionnement du système mécanique 10. Les durées de mesure peuvent par exemple être de quelques dizaines de secondes à quelques minutes.

Le calculateur 5 peut comporter au moins un processeur et au moins une mémoire, au moins un circuit intégré, au moins un système programmable ou bien au moins un circuit logique, ces exemples ne limitant pas la portée donnée à l'expression « calculateur ». Le calculateur 5 peut aussi être relié à une mémoire par une liaison filaire ou une liaison sans fil.

La mémoire peut par exemple stocker des instructions ou algorithmes relatifs à la réalisation de procédés ainsi qu'un ou plusieurs seuils correspondant à ces procédés. La mémoire peut aussi stocker des programmes d'ordinateur destinés à être exécutés par le calculateur 5 afin de mettre en œuvre les procédés.

Le ou les capteurs vibratoires 20 ainsi que le capteur angulaire 25 et le calculateur 5 peuvent faire partie d'un dispositif de surveillance 9 du système mécanique 10 destiné à surveiller le système mécanique afin de détecter et identifier un risque d'apparition ou de présence d'un défaut susceptible de provoquer une panne ou un dysfonctionnement du système mécanique 10.

Le capteur angulaire 25 et le calculateur 5 peuvent faire partie d'un dispositif de détermination de la cyclostationnarité 7 d'un signal vibratoire temporel relatif au système mécanique 10, ce signal vibratoire temporel étant émis par un des capteurs vibratoires 20 du système mécanique 10.

Le ou les capteurs vibratoires 20 ainsi que le capteur angulaire 25 et le calculateur 5 peuvent faire partie d'un dispositif d'agencement 8 d'au moins un capteur vibratoire 20 dédié à une surveillance du système mécanique 10.

Le calculateur 5 peut être unique et partagé entre les différents dispositifs 7,8,9. Alternativement, chaque dispositif 7,8,9 peut comporter un calculateur 5 spécifique dédié.

Le dispositif de détermination de la cyclostationnarité 7 est configuré pour la mise en œuvre, d'un procédé de détermination de la cyclostationnarité d'un signal vibratoire temporel $s(t)$ relatif aux vibrations du système mécanique 10 dont les différentes étapes sont illustrées sur la figure 2.

Il peut en effet être intéressant de savoir si un signal vibratoire temporel $s(t)$ est non cyclostationnaire ou cyclostationnaire. La présence de composantes cyclostationnaires peut être un signe de la possible présence d'un défaut sur le système mécanique 10, et notamment sur un organe tournant 15, un engrenage ou un palier.

Ce procédé de détermination de la cyclostationnarité d'un signal vibratoire temporel $s(t)$ relatif aux vibrations du système mécanique 10 comporte les étapes suivantes.

Tout d'abord, au cours d'une étape de transformation 140, le signal vibratoire temporel $s(t)$ émis par ledit au moins un capteur vibratoire 20 est transformé en un signal vibratoire angulaire $s(\theta)$, de manière connue par le calculateur 5, en fonction du signal angulaire temporel $\theta(t)$ émis par le capteur angulaire 25.

Cette transformation 140 permet ainsi de rééchantillonner le signal vibratoire temporel $s(t)$ du domaine temporel dans le domaine angulaire. Une telle transformation d'un signal vibratoire temporel $s(t)$ dans le domaine angulaire peut notamment permettre d'extraire des propriétés statistiques périodiques lorsqu'un tel signal présente des fluctuations de vitesse.

Une telle transformation du signal vibratoire temporel $s(t)$ vers un signal vibratoire angulaire $s(\theta)$, peut par exemple s'écrire :

$$s(\theta) = \mathcal{R}\{s(t)\},$$

R étant l'opération de rééchantillonnage du domaine temporel vers le domaine angulaire en fonction du signal angulaire temporel $\theta(t)$ relatif à la position angulaire de l'organe tournant 15.

Suite à cette transformation et au cours d'une étape de calcul 150, un indicateur de cyclostationnarité $I_{\alpha}$ normalisé est déterminé par le calculateur 5 à l'aide d'un test statistique d'hypothèse et en fonction du signal vibratoire angulaire $s(\theta)$. Cet indicateur de cyclostationnarité $I_{\alpha}$ est normalisé et donc compris entre 0 et 1.

Un indicateur de cyclostationnarité $I_{\alpha}$ égal à 0 ou proche de 0 permet d'identifier que le signal vibratoire angulaire $s(\theta)$ ne comporte pas une composante de cyclostationnarité d'ordre 1 ou 2. A contrario, l'indicateur de cyclostationnarité est égal à 1 ou proche de 1 lorsque le signal vibratoire angulaire $s(\theta)$ comporte avec une forte confiance une composante de cyclostationnarité d'ordre 1 ou d'ordre 2.

Cet indicateur cyclostationnarité $I_\alpha$ peut par exemple être déterminé en fonction d'une moyenne synchrone ou d'une variance synchrone du signal vibratoire angulaire $s(\theta)$.

Notamment, lorsque le procédé selon l'invention est dédié à une détermination de cyclostationnarité d'ordre 1, le test statistique d'hypothèse peut être un test de Student appliqué à une estimation $\hat{m}(\theta)$ d'une moyenne synchrone du signal vibratoire angulaire $s(\theta)$ par rapport à une période cyclique $\Phi$.

Un indicateur de cyclostationnarité $I_\alpha$ basé sur une estimation $\hat{m}(\theta)$ de la moyenne synchrone du signal vibratoire angulaire $s(\theta)$ par rapport à la période cyclique $\Phi$ est en particulier adapté à une analyse vibratoire d'engrenages et d'arbres tournants du système mécanique 10. En effet, pour ces éléments du système mécanique 10, le moment statistique d'ordre 1 des signaux cyclostationnaires d'ordre 1 est périodique dans le temps.

L'estimation $\hat{m}(\theta)$ de la moyenne synchrone par rapport à la période cyclique $\Phi$ peut être définie selon la relation suivante :

$$\hat{m}(\theta) = \frac{1}{K}\sum_{i=0}^{K-1} s(\theta + i.\Phi)\ ,$$

avec $t_\alpha^{K-1}$, la moitié de l'intervalle de confiance associé à une loi de Student à *K-1* degrés de liberté appliquée avec un risque 1 - $\alpha$,

$\theta$, la position angulaire dudit organe tournant (15) autour dudit axe (AX) de rotation,

$\Sigma$, la fonction somme,

$\Phi$, la période cyclique du signal vibratoire angulaire $s(\theta)$,

*K,* un nombre de cycles tel que $K = \frac{N}{\Phi}$,

*N,* un nombre de points d'échantillonnage formant le signal vibratoire angulaire $s(\theta)$ et

*i,* un nombre entier variant de 0 à (*K-1*).

Le signal vibratoire angulaire $s(\theta)$ peut alors s'écrire : $s(\theta) = m(\theta) + cs(\theta) + b(\theta)$, avec $m(\theta)$, la moyenne synchrone du signal vibratoire angulaire $s(\theta)$, $cs(\theta)$ la composante cyclostationnaire d'ordre supérieur à 1, et $b(\theta)$ le bruit stationnaire gaussien centré qui est indépendant de la moyenne synchrone m($\theta$) et de la composante cyclostationnaire $cs(\theta)$.

Le signal vibratoire angulaire $s(\theta)$ est défini comme étant stationnaire, et donc non cyclostationnaire, lorsque ses moments statistiques sont invariants en fonction de l'angle $\theta$. On a alors une composante cyclostationnaire $cs(\theta)$ d'ordre supérieur à 1 qui est nulle et une moyenne synchrone $m(\theta)$ constante et par exemple égale à une valeur *C*.

En conséquence, lorsque le signal vibratoire angulaire $s(\theta)$ est stationnaire, l'estimation $\hat{m}(\theta)$ de la moyenne synchrone tend alors vers cette valeur constante *C* quand le nombre de cycles *K* augmente. L'estimation $\hat{m}(\theta)$ de la moyenne synchrone est donc indépendante de l'angle $\theta$. L'estimation $\hat{m}(\theta)$ suit généralement une distribution normale dont la variance est inversement proportionnelle au nombre de cycles *K*.

Par contre, lorsque le signal vibratoire angulaire $s(\theta)$ est cyclostationnaire à l'ordre 1, et donc non stationnaire, l'estimation $\hat{m}(\theta)$ de la moyenne synchrone tend vers la moyenne synchrone $m(\theta)$ et dépend donc de l'angle $\theta$.

Le test d'hypothèse de Student permet de tester l'hypothèse de normalité du signal vibratoire angulaire $s(\theta)$ pour chaque angle $\theta$ lorsque le signal vibratoire angulaire $s(\theta)$ est stationnaire. Le test d'hypothèse de Student est effectué *N* fois pour comparer l'estimation $\hat{m}(\theta)$ de la moyenne synchrone pour des angles $\theta$ respectifs donnés par rapport une moyenne théorique nulle.

Une variable $\rho(\theta)$ peut être définie selon la relation suivante $\rho(\theta) = \dfrac{\hat{m}(\theta)}{\hat{\sigma}(\theta)/\sqrt{K}}$ avec $\hat{\sigma}(\theta)$, une estimation de l'écart type du signal vibratoire angulaire $s(\theta)$ répondant à une loi normale pour un angle $\theta$ défini tel que

$$\hat{\sigma}(\theta) = \sqrt{\widehat{vs}(\theta).\frac{K}{K-1}}.$$

La variable $\rho(\theta)$ suit une loi de Student si et seulement si le signal vibratoire angulaire $s(\theta)$ est stationnaire. Cette variable $\rho(\theta)$ est alors dans ce cas inférieure ou égale à un quantile $t_\alpha^{K-1}$ associé à la loi de Student à *K-1* degrés de liberté et correspondant à un risque 1- $\alpha$ que la variable $\rho(\theta)$ suit une loi normale.

Inversement, si le signal vibratoire angulaire $s(\theta)$ est cyclostationnaire d'ordre 1, cette variable $\rho(\theta)$ est alors dans ce cas supérieure au quantile $t_\alpha^{K-1}$. Le test de Student fournit alors un résultat négatif.

En conséquence, il est possible de définir un indicateur statistique $\eta_\alpha(\theta)$ permettant de vérifier avec un risque 1 - $\alpha$ si le signal vibratoire angulaire $s(\theta)$ est non cyclostationnaire ou cyclostationnaire d'ordre 1.

Dans ce but, le calcul 170 d'un indicateur de cyclostationnarité $I_\alpha$ comporte une étape intermédiaire de détermination d'un indicateur statistique $\eta_\alpha(\theta)$ calculé par le calculateur 5. L'indicateur statistique $\eta_\alpha(\theta)$ peut être calculé en appliquant la relation suivante :

$$\eta_\alpha(\theta) = t_\alpha^{K-1} \cdot \frac{\hat{\sigma}(\theta)}{\sqrt{K}},$$

avec $t_\alpha^{K-1}$, la moitié de l'intervalle de confiance associé à une loi de Student à *K-1* degrés de liberté appliquée avec un risque 1 - α que le signal vibratoire angulaire *s(θ)* soit non cyclostationnaire ou cyclostationnaire d'ordre 1,

$\widehat{vs}(\theta)$, une estimation de ladite variance synchrone du signal vibratoire angulaire *s(θ)* par rapport à la période cyclique *Φ*, telle que

$$\widehat{vs}(\theta) = \frac{1}{K} \sum_{i=0}^{K-1} [\hat{r}(\theta + i.\Phi)]^2,$$

$\hat{r}(\theta)$, une estimation d'un résidu du signal vibratoire angulaire *s(θ)* tel que $\hat{r}(\theta) = s(\theta) - \hat{m}(\theta)$, et
$\sqrt{}$, la fonction racine carré.

Le risque 1 - α associé à cet indicateur statistique $\eta_\alpha(\theta)$ correspond à la probabilité que pour un angle *θ*, l'estimation $\hat{m}(\theta)$ de la moyenne synchrone du signal vibratoire angulaire *s(θ)* soit supérieure à l'indicateur statistique $\eta_\alpha(\theta)$ correspondant, alors que le signal vibratoire angulaire *s(θ)* pour cet angle *θ* n'est en fait pas cyclostationnaire, ou inversement que cette estimation $\hat{m}(\theta)$ de la moyenne synchrone soit inférieure ou égale à l'indicateur statistique $\eta_\alpha(\theta)$ correspondant pour cet angle *θ*, alors que le signal vibratoire angulaire *s(θ)* pour cet angle *θ* est bien cyclostationnaire.
Le risque 1 - α est par exemple de 5%.
Dans le cas où le signal vibratoire angulaire *s(θ)* est cyclostationnaire sur la plage de variation de l'angle *θ*, un nombre important des valeurs de l'estimation $\hat{m}(\theta)$ de la moyenne synchrone est supérieur à l'indicateur statistique $\eta_\alpha(\theta)$. L'indicateur de cyclostationnarité $I_\alpha$ tend ainsi à se rapprocher de 1 quand ce nombre des valeurs de l'estimation $\hat{m}(\theta)$ de la moyenne synchrone supérieures à l'indicateur statistique $\eta_\alpha(\theta)$ augmente, confirmant ainsi la cyclostationnarité du signal vibratoire angulaire *s(θ)*.
L'indicateur de cyclostationnarité $I_\alpha$ est par exemple égal à un rapport de la somme des valeurs absolues des estimations $\hat{m}(\theta)$ de la moyenne synchrone qui sont supérieures à l'indicateur statistique $\eta_\alpha(\theta)$, sur la plage de variation de l'angle *θ*, par la somme des valeurs absolues de toutes les estimations $\hat{m}(\theta)$ de la moyenne synchrone sur cette plage de variation de l'angle *θ*.

Le calculateur 5 peut appliquer la relation $I_\alpha = \dfrac{\sum_\theta \left( |\hat{m}(\theta)| . \mathcal{J}_{Cyc}(\theta) \right)}{\sum_\theta |\hat{m}(\theta)|}$ pour calculer l'indicateur de cyclosta-

tionnarité $I_\alpha$,

avec $\mathcal{J}_{Cyc}(\theta)$, une fonction indicatrice de la cyclostationnarité du signal vibratoire angulaire qui est égale à 1 si $\hat{m}(\theta) > \eta_\alpha(\theta)$ et à 0 si $\hat{m}(\theta) \leq \eta_\alpha(\theta)$,
| |, la fonction valeur absolue.
Lorsque le procédé selon l'invention est dédié à une détermination de cyclostationnarité d'ordre 2, le test statistique d'hypothèse peut être un test de Barlett appliqué à une estimation $\widehat{vs}(\theta)$ d'une variance synchrone du signal vibratoire angulaire *s(θ)* par rapport à la période cyclique *Φ*.
Un indicateur de cyclostationnarité $I_\alpha$ basé sur une estimation $\hat{m}(\theta)$ de la variance synchrone du signal vibratoire angulaire *s(θ)* est en particulier adapté à une analyse vibratoire des roulements du système mécanique 10. En effet, pour ces des roulements, le moment statistique d'ordre 2 des signaux cyclostationnaires d'ordre 2 est périodique dans le temps.
Le test de Bartlett est utilisé pour comparer les *N* variances issues de *N* distributions normales des *K* échantillons des *K* cycles du signal vibratoire angulaire *s(θ)*, en prenant en compte globalement la variance synchrone *vs(θ)* du signal vibratoire angulaire *s(θ)*.
Une estimation $\widehat{vs}(\theta)$ de la variance synchrone du signal vibratoire angulaire *s(θ)* par rapport à la période cyclique *Φ* est définie selon la relation suivante : $\widehat{vs}(\theta) = \frac{1}{K} \sum_{i=0}^{i=K-1} [\hat{r}(\theta + i.\Phi)]^2$.

Dans ce cas, un scalaire *ψ* peut être déterminé en fonction de l'estimation $\widehat{vs}(\theta)$ de la variance synchrone selon la relation suivante : $\psi = \frac{3N.(K-1).\left[ln\left(\sum_{n=1}^{N}\widehat{vs}(\theta_n)/N\right) - \sum_{n=1}^{N}ln\left(\widehat{vs}(\theta_n)\right)/N\right]}{3N.(K-1)+N+1}$ , avec *ln*, la fonction logarithme

népérien. Ce scalaire $\psi$ est calculé sur toute la plage de variation de l'angle $\theta$.

Ce scalaire $\psi$ suit une loi de Khi-deux $\chi^2$ à *N-1* degrés de liberté. Un intervalle de confiance $\mathcal{X}_{\alpha}^2$ relatif à cette loi Khi-deux et associé avec un risque 1 - $\alpha$ peut être déterminé.

Lorsque le signal vibratoire angulaire $s(\theta)$ est stationnaire, les moments statistiques sont invariants dans le temps. Le scalaire $\psi$ est alors inférieur ou égal à l'intervalle de confiance $\mathcal{X}_{\alpha}^2$.

Inversement, si le signal vibratoire angulaire $s(\theta)$ est cyclostationnaire d'ordre 1, ce scalaire $\psi$ est alors supérieur ou égal à l'intervalle de confiance $\mathcal{X}_{\alpha}^2$. Le test de Bartlett fournit alors un résultat négatif.

L'indicateur de cyclostationnarité $I_{\alpha}$ peut alors être calculé par le calculateur 5 en appliquant la relation suivante :

$$I_{\alpha} = exp\left(-\frac{\mathcal{X}_{\alpha}^2}{\psi}\right),$$

avec *exp*, la fonction mathématique exponentielle.

De la sorte, un indicateur de cyclostationnarité $I_{\alpha}$ peut alors être calculé relativement à une cyclostationnarité d'ordre 1 ou d'ordre 2.

Enfin, au cours d'une étape de détermination 190, le signal vibratoire angulaire $s(\theta)$ est considéré comme étant cyclostationnaire d'ordre 1 ou d'ordre 2 lorsque l'indicateur de cyclostationnarité $I_{\alpha}$ est supérieur ou égal à un seuil de cyclostationnarité prédéterminé. Ce seuil de cyclostationnarité prédéterminé est compris entre 0 et 1.

En outre le procédé selon l'invention peut comporter des étapes supplémentaires. Par exemple, une génération 192 d'une alerte de cyclostationnarité peut être effectuée lorsque l'indicateur de cyclostationnarité $I_{\alpha}$ est supérieur ou égal au seuil de cyclostationnarité afin d'indiquer à un opérateur ou un pilote de l'aéronef 1 que le signal vibratoire est cyclostationnaire.

De manière complémentaire ou alternative, une génération 194 d'une alerte de non cyclostationnarité peut être effectuée lorsque l'indicateur de cyclostationnarité $I_{\alpha}$ est inférieur au seuil de cyclostationnarité afin d'indiquer à un opérateur ou un pilote de l'aéronef 1 que le signal vibratoire est non cyclostationnaire.

Chacune de ces alertes peut être visuelle, par exemple en étant réalisée par l'allumage d'un ou de plusieurs voyants, ou l'affichage de messages explicites ou de symboles affichés sur un écran. Ces alertes peuvent aussi être sonores, par exemple par l'émission de sons spécifiques ou de message explicites. Dans ces deux cas, le calculateur 5 transmet alors un signal d'alerte, électrique ou optique, numérique ou analogique, porteur d'une information relative à l'alerte à générer, à un alerteur qui émet alors l'alerte.

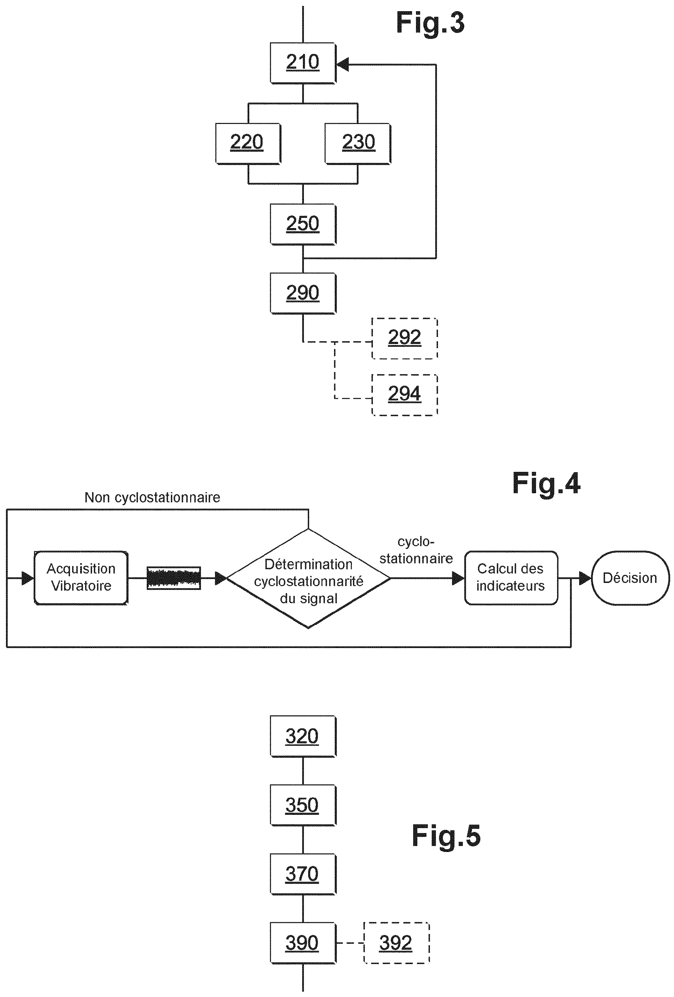

Par ailleurs, le dispositif d'agencement 8 est configuré pour la mise en œuvre, notamment à l'aide du calculateur 5, d'un procédé d'agencement d'au moins un capteur vibratoire 20 dédié à une surveillance du système mécanique 10 dont les différentes étapes sont illustrées sur la figure 3.

Tout d'abord, au cours d'une étape de positionnement et orientation 210, un ou plusieurs capteurs vibratoires 20 sont positionnés et orientés sur le système mécanique 10. Chaque capteur vibratoire 20 est positionné à une position jugée pertinente, par exemple à proximité ou sur un organe tournant 15, un palier, une couronne dentée ou une roue dentée, avec une orientation particulière. Cette orientation d'un capteur vibratoire 20 permet d'orienter une ou plusieurs directions privilégiées de mesure du capteur vibratoire 20 par rapport à un référentiel du système mécanique, par exemple par rapport à un bâti ou un carter fixe du système mécanique 10, ce référentiel comportant des axes fixes par rapport à ce bâti ou ce carter.

Ensuite, au cours d'une étape d'émission 220, des signaux vibratoires temporels $s(t)$ relatifs au comportement vibratoire du système mécanique 10 ou d'un de ses composants sont émis par ledit au moins un capteur vibratoire 20 et transmis au calculateur 5. Ces signaux vibratoires temporels $s(t)$ sont mesurés respectivement lors de différents régimes de fonctionnement du système mécanique 10.

Au cours d'une étape d'émission 230, des signaux angulaires temporels $\theta(t)$ variant en fonction d'une position angulaire de l'organe tournant 15 autour de l'axe AX de rotation sont émis par le capteur angulaire 25 et transmis au calculateur 5. Ces signaux angulaires temporels $\theta(t)$ sont mesurés respectivement lors de différents régimes de fonctionnement du système mécanique 10.

Les étapes d'émission 220 et 230 sont réalisées en parallèle, voire de façon simultanée et synchronisée.

Au cours d'une étape de calcul 250, un indicateur de cyclostationnarité $I_{\alpha}$ relatif au signal vibratoire temporel $s(t)$ est calculé pour les différents régimes de fonctionnement du système mécanique 10, en appliquant le procédé de détermination de la cyclostationnarité précédemment décrit. Les étapes du procédé de détermination de la cyclostationnarité 140, 170 et 190 sont ainsi effectuées pour transformer et analyser le signal vibratoire temporel $s(t)$, puis calculer les indicateurs de cyclostationnarité $I_\alpha$ relatifs respectivement aux différents régimes de fonctionnement du système mécanique 10.

Ces indicateurs de cyclostationnarité $I_\alpha$ peuvent être calculés pour déterminer une cyclostationnarité d'ordre 1 ou d'ordre 2.

Les étapes 210, 220, 230 et 250 sont réalisées au cours d'au moins deux itérations, voire au cours d'au moins deux, voire de nombreuses itérations.

A chaque itération, le ou les capteurs vibratoires 20 sont situés à des positions et/ou des orientations différentes sur le système mécanique 10. Par exemple, entre deux itérations, un déplacement d'un capteur vibratoire 20 peut être réalisé en changeant la position et/ou l'orientation de ce capteur vibratoire 20.

Les étapes 220, 230 et 250 sont ainsi exécutées pour chaque position et orientation successives du ou des capteurs vibratoires 20 par rapport au système mécanique 10 choisies lors de l'étape de positionnement et d'orientation 110. Ainsi, un indicateur de cyclostationnarité $I_\alpha$ peut être calculé pour chaque agencement de chaque capteur vibratoire 20, cet agencement définissant une position du capteur vibratoire 20 ainsi que son orientation, et pour chaque régime de fonctionnement du système mécanique 10.

Ensuite, au cours d'une étape de validation 280, la position et l'orientation dudit au moins un capteur vibratoire 20 sur le système mécanique 10 sont validées en fonction d'une valeur caractéristique des indicateurs de cyclostationnarité $I_\alpha$ relatifs à chaque agencement testé pour les différents régimes de fonctionnement du système mécanique 10. Un agencement, et donc une position et une orientation dudit au moins un capteur vibratoire 20 sont ainsi validées si la valeur caractéristique des indicateurs de cyclostationnarité $I_\alpha$ relatifs cette position et cette orientation pour les différents régimes de fonctionnement du système mécanique 10 est supérieure à un seuil de validation.

Le seuil de validation est compris entre 0 et 1 et peut être déterminé par essais ou par simulations.

Chaque valeur caractéristique relative à un agencement dudit au moins un capteur vibratoire 20 est calculée en fonction des indicateurs de cyclostationnarité $I_\alpha$ relatifs à la position et à l'orientation selon cet agencement pour les différents régimes de fonctionnement du système mécanique 10. Une valeur caractéristique peut par exemple être égale à une valeur médiane de ces indicateurs de cyclostationnarité $I_\alpha$, à une moyenne arithmétique de ces indicateurs de cyclostationnarité $I_\alpha$ ou à une moyenne quadratique de ces indicateurs de cyclostationnarité $I_\alpha$.

De la sorte, un ou plusieurs agencements dudit au moins un capteur vibratoire 20 sur le système mécanique 10 peuvent être validés.

Lorsque plusieurs agencements sont validés, l'agencement d'un capteur vibratoire pour lequel la valeur caractéristique des indicateurs de cyclostationnarité $I_\alpha$ est la plus grande peut par exemple être choisi.

D'autres critères peuvent également être pris en compte pour valider la position et l'orientation d'un capteur vibratoire 20.

Par exemple, lors de l'étape de validation 280, la position et de l'orientation d'un capteur vibratoire 20 peuvent être validées si une valeur maximale et une valeur minimale des indicateurs de cyclostationnarité $I_\alpha$ relatifs à cet agencement sont séparées par un écart inférieur à un seuil de différence. Le seuil de différence peut être déterminé par essais ou par simulations. Ce critère supplémentaire permet ainsi de valider une position et une orientation pour lesquelles d'une part la valeur caractéristique des indicateurs de cyclostationnarité $I_\alpha$ est supérieure au seuil de validation et d'autre part les valeurs de ces indicateurs de cyclostationnarité $I_\alpha$ ont une dispersion limitée.

Un autre critère de validation peut être la pente d'une droite moyenne construite avec les valeurs des indicateurs de cyclostationnarité $I_\alpha$ pour chaque agencement du capteur vibratoire. Un tel agencement peut par exemple être validé lorsque la pente d'une telle droite est inférieure à un seuil de pente. Le seuil de pente peut être déterminé par essais ou par simulations.

Par ailleurs, les différents régimes de fonctionnement du système mécanique 10 utilisés pour les mesures et les émissions des signaux vibratoires temporels $s(t)$ et des signaux angulaires temporels $\theta(t)$ peuvent comporter uniquement des régimes stabilisés, les régimes transitoires étant ainsi exclus.

Quels que soient le ou les critères de validation utilisés pour valider l'agencement de chaque capteur vibratoire 20, la normalisation de l'indicateur de cyclostationnarité $I_\alpha$ du signal vibratoire temporel $s(\theta)$ permet avantageusement de comparer de façon fiable les valeurs de cet indicateur de cyclostationnarité $I_\alpha$ quelles que soient les positions et/ou les orientations de ce capteur vibratoire 20, bien que le signal vibratoire fourni par ce capteur vibratoire 20 puisse être significativement différent selon ces différents agencements.

De plus, ce procédé peut également comporter une étape d'agencement 290 d'un ou de plusieurs capteurs vibratoires 20 selon les positions et orientations validées.

La figure 4 représente un schéma illustrant un procédé de surveillance d'un système mécanique 10 dans lequel intervient le procédé de détermination de la cyclostationnarité du signal vibratoire précédemment décrit. Ce procédé de détermination de la cyclostationnarité intervient ainsi entre les mesures vibratoires réalisées par un ou plusieurs capteurs vibratoires 20 et un procédé de surveillance d'un système mécanique 10, afin de surveiller de façon fiable et efficace le système mécanique 10 à l'aide du signal vibratoire temporel $s(t)$ émis par chacun de ces capteurs vibratoires 20.

En outre, le dispositif de surveillance 9 d'un système mécanique 10 est configuré pour la mise en œuvre, notamment à l'aide du calculateur 5, d'un tel procédé de surveillance d'un système mécanique 10 dont les différentes étapes sont illustrées sur la figure 5.

Tout d'abord, au cours d'une étape d'émission 320, au moins un signal vibratoire temporel $s(t)$ est émis par au moins un capteur vibratoire 20 vers le calculateur 5.

Au cours d'une étape d'émission 330, un signal angulaire temporel $\theta(t)$ est émis par le capteur angulaire 25 vers le calculateur 5.

Les étapes d'émission 320 et 330 sont réalisées en parallèle, voire de façon simultanée et synchronisée.

Au cours d'une étape de calcul 350, un indicateur de cyclostationnarité $I_\alpha$ pour le signal vibratoire temporel $s(t)$ est calculé, en appliquant le procédé de détermination de la cyclostationnarité précédemment décrit.

Le signal vibratoire temporel $s(t)$ est ainsi transformé et analysé en appliquant les étapes 140, 170 et 190 du procédé de détermination de la cyclostationnarité.

Suite à l'étape de calcul 350 et si l'indicateur de cyclostationnarité $I_\alpha$ est supérieur ou égal au seuil de cyclostationnarité, une étape de calcul 370 est réalisée par le calculateur. Au moins un indicateur de surveillance du système mécanique 10 est alors calculé en fonction du signal vibratoire temporel $s(t)$.

Cet indicateur de surveillance peut par exemple être calculé en fonction de l'indicateur de cyclostationnarité $I_\alpha$, voire être égal à l'indicateur cyclostationnarité $I_\alpha$. Alternativement, cet indicateur de surveillance peut être calculé en fonction du signal vibratoire temporel $s(t)$ ou en fonction du signal vibratoire angulaire $s(\theta)$.

Enfin, au cours d'une étape détermination 390, un risque de présence d'un défaut sur le système mécanique (10) peut être déterminé, par le calculateur 5, en fonction d'une comparaison dudit au moins un indicateur de surveillance avec un seuil de défaut.

Par exemple, un tel risque de présence d'un défaut sur le système mécanique 10 est déterminé si ledit au moins un indicateur de surveillance est supérieur au seuil de défaut.

Le système mécanique 10 ne peut pas dans ce cas être considéré comme étant pleinement fonctionnel. Le calculateur 5 peut alors émettre un signal d'alerte de risque, électrique ou optique, numérique ou analogique, vers un alerteur au cours d'une étape d'alerte de risque 392, l'alerteur émettant en conséquence une alerte de risque par exemple visuelle ou sonore, pour signaler l'existence de ce risque à un opérateur ou à un pilote de l'aéronef 1.

A contrario, si ledit au moins un indicateur de surveillance est inférieur ou égal au seuil de défaut, le système mécanique 10 peut être jugé fonctionnel, aucun risque de défaut sur le système mécanique 10 n'étant détecté par le procédé de surveillance. Le calculateur 5 peut alors être configuré pour émettre un signal d'information, électrique ou optique, numérique ou analogique, vers un alerteur, l'alerteur émettant en conséquence une alerte d'absence de risque 394, par exemple visuelle ou sonore pour indiquer que le système mécanique 10 est pleinement fonctionnel à un opérateur ou à un pilote de l'aéronef 1.

De la sorte, le procédé de surveillance selon l'invention permet de réaliser une surveillance fiable et efficace du système mécanique 10 afin de détecter une éventuelle présence d'un défaut sur le système mécanique 10.

Ce procédé de surveillance d'un système mécanique 10 permet en effet d'effectuer le calcul d'indicateurs de surveillance uniquement sur la base de signaux vibratoires comportant une composante cyclostationnaire et donc susceptibles de comporter des signes d'apparition d'au moins un défaut. Ce procédé de surveillance évite ainsi des calculs inutiles d'indicateurs de surveillance du système mécanique 10.

Naturellement, la présente invention est sujette à de nombreuses variations quant à sa mise en oeuvre , pour autant qu'ils restent dans l'étendue de la protection tel qu'elle est définie par les revendications. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est définie par les revendications.

## Revendications

**1.** Procédé de détermination de la cyclostationnarité d'un signal vibratoire relatif à un système mécanique (10), ledit système mécanique (10) comportant au moins un organe tournant (15) en rotation autour d'un axe (AX) de rotation, au moins un capteur vibratoire (20) émettant ledit signal vibratoire temporel $s(t)$, un capteur angulaire (25) émettant un signal angulaire temporel $\theta(t)$ variant en fonction d'une position angulaire dudit organe tournant (15) autour dudit axe (AX) de rotation et un calculateur (5),

    ledit procédé comportant les étapes suivantes :

        - transformation (140) dudit signal vibratoire temporel $s(t)$ en un signal vibratoire angulaire $s(\theta)$, à l'aide dudit calculateur (5) en fonction dudit signal angulaire temporel $\theta(t)$,
        - calcul (170) avec ledit calculateur (5) d'un indicateur de cyclostationnarité $I_\alpha$ normalisé à l'aide d'un test statistique d'hypothèse et en fonction dudit signal vibratoire angulaire $s(\theta)$, et

- détermination (190) que ledit signal vibratoire angulaire $s(\theta)$ est cyclostationnaire lorsque ledit indicateur de cyclostationnarité $I_\alpha$ est supérieur ou égal à un seuil de cyclostationnarité prédéterminé, ledit seuil de cyclostationnarité prédéterminé étant compris entre 0 et 1,

**caractérisé en ce que** ledit procédé est dédié à une détermination de cyclostationnarité d'ordre 1, et ledit test statistique d'hypothèse est un test de Student appliqué à une estimation $\hat{m}(\theta)$ d'une moyenne synchrone dudit signal vibratoire angulaire $s(\theta)$ par rapport à une période cyclique $\Phi$ et ledit calcul (170) d'un indicateur de cyclostationnarité $I_\alpha$ comporte une étape intermédiaire de détermination d'un indicateur statistique $\eta_\alpha(\theta)$ calculé selon la relation suivante : $\eta_\alpha(\theta) = t_\alpha^{K-1} . \dfrac{\hat{\sigma}(\theta)}{\sqrt{K}}$,

où $t_\alpha^{K-1}$ est la moitié d'un intervalle de confiance associé audit test de Student à $K$-1 degrés de liberté avec un risque 1 - $\alpha$, $\hat{\sigma}(\theta)$ est une estimation de l'écart type dudit signal vibratoire angulaire $s(\theta)$ répondant à une loi normale pour un angle $\theta$

défini tel que $\hat{\sigma}(\theta) = \sqrt{\widehat{vs}(\theta) . \dfrac{K}{K-1}}$,

$\theta$ est la position angulaire dudit organe tournant (15) autour dudit axe (AX) de rotation,

$\widehat{vs}(\theta)$ est une estimation de ladite variance synchrone dudit signal vibratoire angulaire $s(\theta)$ par rapport à ladite période cyclique $\Phi$, telle que

$$\widehat{vs}(\theta) = \frac{1}{K}\sum_{i=0}^{K-1}[\hat{r}(\theta + i.\Phi)]^2 ,$$

$\hat{r}(\theta)$ est une estimation d'un résidu dudit signal vibratoire angulaire $s(\theta)$ tel que $\hat{r}(\theta) = s(\theta) - \hat{m}(\theta)$,

$\hat{m}(\theta)$ est ladite estimation de ladite moyenne synchrone par rapport à ladite période cyclique $\Phi$ telle que

$$\hat{m}(\theta) = \frac{1}{K}\sum_{i=0}^{K-1} s(\theta + i.\Phi) ,$$

$\sqrt{}$ est la fonction racine carré,

$\Sigma$ est la fonction somme,

$\Phi$ est ladite période cyclique dudit signal vibratoire angulaire $s(\theta)$,

$K$ est un nombre de cycles tel que $K = \dfrac{N}{\Phi}$,

$N$ est un nombre de points d'échantillonnage formant le signal vibratoire angulaire $s(\theta)$, et

$i$ est un nombre entier variant de 0 à ($K$-1).

2. Procédé selon la revendication 1,
   pour lequel ledit indicateur de cyclostationnarité $I_\alpha$ est calculé à l'aide de la relation suivante :

$$I_\alpha = \frac{\sum_\theta\left(|\hat{m}(\theta)|.\mathcal{J}_{cyc}(\theta)\right)}{\sum_\theta|\hat{m}(\theta)|},$$

où $\mathcal{J}_{cyc}(\theta)$ est une fonction indicatrice de la cyclostationnarité dudit signal vibratoire angulaire $s(\theta)$ qui est égale à 1 si $\hat{m}(\theta) > \eta_\alpha(\theta)$ et égale à 0 si $\hat{m}(\theta) \leq \eta_\alpha(\theta)$, et

$\|$ est la fonction valeur absolue.

3. Procédé de détermination de la cyclostationnarité d'un signal vibratoire relatif à un système mécanique (10), ledit système mécanique (10) comportant au moins un organe tournant (15) en rotation autour d'un axe (AX) de rotation, au moins un capteur vibratoire (20) émettant ledit signal vibratoire temporel $s(t)$, un capteur angulaire (25) émettant un signal angulaire temporel $\theta(t)$ variant en fonction d'une position angulaire dudit organe tournant (15) autour dudit axe (AX) de rotation et un calculateur (5),

   ledit procédé comportant les étapes suivantes :

- transformation (140) dudit signal vibratoire temporel $s(t)$ en un signal vibratoire angulaire $s(\theta)$, à l'aide dudit calculateur (5) en fonction dudit signal angulaire temporel $\theta(t)$,
- calcul (170) avec ledit calculateur (5) d'un indicateur de cyclostationnarité $I_\alpha$ normalisé à l'aide d'un test statistique d'hypothèse et en fonction dudit signal vibratoire angulaire $s(\theta)$, et
- détermination (190) que ledit signal vibratoire angulaire $s(\theta)$ est cyclostationnaire lorsque ledit indicateur de cyclostationnarité $I_\alpha$ est supérieur ou égal à un seuil de cyclostationnarité prédéterminé, ledit seuil de cyclostationnarité prédéterminé étant compris entre 0 et 1,

**caractérisé en ce que** ledit procédé est dédié à une détermination de cyclostationnarité d'ordre 2, et ledit test statistique d'hypothèse est un test de Bartlett appliqué à une estimation $\widehat{vs}$ d'une variance synchrone dudit signal vibratoire angulaire $s(\theta)$ par rapport à une période cyclique $\Phi$ et ledit indicateur de cyclostationnarité $I_\alpha$ est calculé selon la relation suivante :

$$I_\alpha = exp\left(-\frac{x_{\tilde{\alpha}}^2}{\psi}\right),$$

où $exp$ est la fonction mathématique exponentielle.

$\psi$ est un scalaire déterminé en fonction de ladite estimation $\widehat{vs}$ de ladite variance synchrone telle que :

$$\psi = \frac{3N.(K-1).\left[ln\left(\sum_{n=1}^N \widehat{vs}(\theta_n)/N\right) - \sum_{n=1}^N ln\left(\widehat{vs}(\theta_n)\right)/N\right]}{3N.(K-1)+N+1} \ ,$$

$\widehat{vs}(\theta)$ est ladite estimation de ladite variance synchrone par rapport à ladite période cyclique $\Phi$, telle que

$$\widehat{vs}(\theta) = \frac{1}{K}\sum_{i=0}^{K-1}[\hat{r}(\theta + i.\Phi)]^2 \ ,$$

$í(\theta)$ est une estimation d'un résidu dudit signal vibratoire angulaire $s(\theta)$ tel que $í(\theta) = s(\theta) - \hat{m}(\theta)$,

$\hat{m}(\theta)$ est une estimation de ladite moyenne synchrone dudit signal vibratoire angulaire $s(\theta)$ par rapport à ladite période cyclique $\Phi$, telle que $\hat{m}(\theta) = \frac{1}{K}\sum_{i=0}^{K-1} s(\theta + i.\Phi)$,

$\Sigma$ est la fonction somme,

$\theta$ est la position angulaire dudit organe tournant (15) autour dudit axe (AX) de rotation,

$\Phi$ est ladite période cyclique dudit signal vibratoire angulaire $s(\theta)$,

K est un nombre de cycles, tel que $K = \frac{N}{\Phi}$,

$N$ est un nombre de points d'échantillonnage formant ledit signal vibratoire angulaire $s(\theta)$,

$i$ est un nombre entier variant de 0 à $(K-1)$,

$ln$ est la fonction logarithme népérien, et

$x_\alpha^2$, un intervalle de confiance associé à une loi de Khi-deux $à$ $(N-1)$ degrés de liberté avec un risque 1 - $\alpha$.

4. Procédé selon l'une quelconque des revendications 1 à 3, pour lequel ledit procédé comporte au moins une étape supplémentaire parmi :

- une génération (192) d'une alerte de cyclostationnarité lorsque ledit indicateur de cyclostationnarité $I_\alpha$ est supérieur ou égal audit seuil de cyclostationnarité, et
- une génération (194) d'une alerte de non cyclostationnarité lorsque ledit indicateur de cyclostationnarité $I_\alpha$ est inférieur audit seuil de cyclostationnarité.

5. Procédé d'agencement pour agencer au moins un capteur vibratoire (20) dédié à une surveillance d'un système mécanique (10), ledit système mécanique (10) comportant au moins un organe tournant (15) en rotation autour d'un axe (AX) de rotation, au moins un capteur vibratoire (20), un capteur angulaire (25), et un calculateur (5),

ledit procédé d'agencement comportant les étapes suivantes réalisées au cours d'au moins deux itérations successives :

- positionnement et orientation (210) dudit au moins un capteur vibratoire (20) sur ledit système mécanique (10), ledit au moins un capteur vibratoire (20) étant situé à une position et/ou une orientation différente à chaque itération,
- émission (220) d'un signal vibratoire temporel *s(t)* par ledit au moins un capteur vibratoire (20) pour différents régimes de fonctionnement dudit système mécanique (10),
- émission (230) d'un signal angulaire temporel $\theta(t)$ par le capteur angulaire (25) variant en fonction d'une position angulaire dudit organe tournant (15) autour dudit axe (AX) de rotation pour lesdits différents régimes de fonctionnement dudit système mécanique (10),
- calcul (250) d'un indicateur de cyclostationnarité $I_\alpha$ relatif audit signal vibratoire temporel *s(t)* pour lesdits différents régimes de fonctionnement dudit système mécanique (10), en appliquant le procédé de détermination de la cyclostationnarité selon l'une quelconque des revendications 1 à 4,

ledit procédé d'agencement comportant également une étape de validation (280) de ladite position et de ladite orientation dudit au moins un capteur vibratoire (20) sur ledit système mécanique (10), au cours de laquelle ladite position et ladite orientation dudit au moins un capteur vibratoire (20) sont validées si une valeur caractéristique desdits indicateurs de cyclostationnarité $I_\alpha$ relatifs à ladite position et de ladite orientation pour lesdits différents régimes de fonctionnement dudit système mécanique (10) est supérieure à un seuil de validation, ladite valeur caractéristique étant choisie parmi une valeur médiane desdits indicateurs de cyclostationnarité $I_\alpha$, une moyenne arithmétique desdits indicateurs de cyclostationnarité $I_\alpha$ ou une moyenne quadratique desdits indicateurs de cyclostationnarité $I_\alpha$.

6. Procédé selon la revendication 5,
   pour lequel lors de ladite étape de validation (280), ladite position et de ladite orientation dudit au moins un capteur vibratoire (20) sont validées si une différence entre une valeur maximale et une valeur minimale desdits indicateurs de cyclostationnarité $I_\alpha$ relatifs à ladite position et de ladite orientation est également inférieure à un seuil de différence.

7. Procédé selon la revendication 6,
   pour lequel ledit seuil de différence est égal à un pourcentage de ladite valeur caractéristique desdits indicateurs de cyclostationnarité $I_\alpha$.

8. Procédé selon l'une quelconque des revendications 5 à 7,
   pour lequel lesdits différents régimes de fonctionnement dudit système mécanique (10) comportent uniquement des régimes stabilisés et ne comporte pas de régimes transitoires.

9. Procédé de surveillance d'un système mécanique (10), ledit système mécanique (10) comportant au moins un organe tournant (15) en rotation autour d'un axe (AX) de rotation, au moins un capteur vibratoire (20) émettant un signal vibratoire temporel *x(t),* un capteur angulaire (25) émettant un signal angulaire temporel $\theta(t)$ variant en fonction d'une position angulaire dudit organe tournant (15) autour dudit axe (AX) de rotation et un calculateur (5),
   ledit procédé comportant les étapes suivantes :

   - émission (320) dudit signal vibratoire temporel *s(t)* par ledit au moins un capteur vibratoire (20),
   - émission (330) dudit signal angulaire temporel $\theta(t)$ par ledit capteur angulaire (25),
   - calcul (350) d'un indicateur de cyclostationnarité $I_\alpha$ pour ledit signal vibratoire temporel *s(t),* en appliquant le procédé de détermination de la cyclostationnarité selon l'une quelconque des revendications 1 à 4,
   - si ledit indicateur de cyclostationnarité $I_\alpha$ est supérieur ou égal audit seuil de cyclostationnarité, calcul (370) d'au moins un indicateur de surveillance dudit système mécanique (10) à l'aide dudit calculateur (5) en fonction dudit signal vibratoire temporel *s(t),* et
   - détermination (390) d'une présence d'un défaut sur ledit système mécanique (10) selon une comparaison dudit au moins un indicateur de surveillance avec un seuil de défaut.

10. Procédé selon la revendication 9,
    pour lequel ladite présence d'un défaut sur ledit système mécanique (10) est effective si ledit au moins un indicateur de surveillance est supérieur audit seuil de défaut.

11. Procédé selon l'une quelconque des revendications 9 à 10,
    pour lequel ledit au moins un indicateur de surveillance est égal audit indicateur de cyclostationnarité $I_\alpha$ ou est calculé

en fonction dudit indicateur de cyclostationnarité $I_\alpha$.

**12.** Dispositif de détermination d'une cyclostationnarité (7) pour valider si un signal vibratoire temporel $x(t)$ relatif à un système mécanique (10) est cyclostationnaire, ledit dispositif de détermination d'une cyclostationnarité (7) étant configuré pour un système mécanique (10) comportant au moins un organe tournant (15) en rotation autour d'un axe (AX) de rotation et au moins un capteur vibratoire (20) émettant ledit signal vibratoire temporel $s(t)$, ledit dispositif de détermination d'une cyclostationnarité (7) comportant un capteur angulaire (25) émettant un signal angulaire temporel $\theta(t)$ variant en fonction d'une position angulaire dudit organe tournant (15) autour de l'axe (AX) de rotation, et un calculateur (5),

**caractérisé en ce que** ledit dispositif de détermination d'une cyclostationnarité (7) est configuré pour la mise en œuvre du procédé selon l'une quelconque des revendications 1 à 4.

**13.** Dispositif d'agencement (8) d'au moins un capteur vibratoire (20) dédié à une surveillance d'un système mécanique (10), ledit système mécanique (10) comportant au moins un organe tournant (15) en rotation autour d'un axe (AX) de rotation, au moins un capteur vibratoire (20), ledit dispositif d'agencement (8) comportant un capteur angulaire (25) émettant un signal angulaire temporel $\theta(t)$ variant en fonction d'une position angulaire dudit organe tournant (15) autour de l'axe (AX) de rotation et un calculateur (5),

**caractérisé en ce que** ledit dispositif d'agencement (8) est configuré, lors d'au moins deux itérations,

- pour recevoir le positionnement et l'orientation (210) dudit au moins un capteur vibratoire (20) sur ledit système mécanique (10), ledit au moins un capteur vibratoire (20) étant situé à une position et/ou une orientation différente à chaque itération,
- pour recevoir un signal vibratoire temporel $s(t)$ émis par ledit au moins un capteur vibratoire (20) pour différents régimes de fonctionnement dudit système mécanique (10), et
- pour la mise en œuvre des étapes d'émission (230) d'un signal angulaire temporel $\theta(t)$ par le capteur angulaire (25) et de calcul (250) d'un indicateur de cyclostationnarité $I_\alpha$ du procédé selon l'une quelconque des revendications 5 à 8, ledit dispositif de surveillance (9) étant ensuite configuré pour mettre en œuvre l'étape de validation (280) de ladite position et de ladite orientation dudit au moins un capteur vibratoire (20) dudit procédé.

**14.** Dispositif de surveillance (9) pour surveiller un système mécanique (10), ledit dispositif de surveillance (9) étant configuré pour surveiller un système mécanique (10) comportant au moins un organe tournant (15) en rotation autour d'un axe (AX) de rotation, ledit dispositif de surveillance (9) comportant au moins un capteur vibratoire (20) émettant un signal vibratoire temporel $s(t)$, un capteur angulaire (25) émettant un signal angulaire temporel $\theta(t)$ variant en fonction d'une position angulaire dudit organe tournant (15) autour de l'axe (AX) de rotation et un calculateur (5),

**caractérisé en ce que** ledit dispositif de surveillance (9) est configuré pour la mise en œuvre du procédé selon l'une quelconque des revendications 9 à 11.

**15.** Système mécanique (10) comportant au moins un organe tournant (15) en rotation autour d'un axe (AX) de rotation, **caractérisé en ce que** ledit système mécanique (10) comporte un dispositif de surveillance (9) selon la revendication 14.

**16.** Boîte de transmission de puissance (6) comportant un système mécanique (10) selon la revendication 15.

**Patentansprüche**

**1.** Verfahren zum Bestimmen der Zyklostationärität eines Schwingungssignals in Bezug auf ein mechanisches System (10), wobei das mechanische System (10) mindestens ein um eine Drehachse (AX) drehbares Drehelement (15), mindestens einen Schwingungssensor (20), der das zeitabhängige Schwingungssignal $s(t)$ abgibt, einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,

wobei das Verfahren die folgenden Schritte umfasst:

- Umwandeln (140) des zeitabhängigen Schwingungssignals $s(t)$ in ein Winkelschwingungssignal $s(\theta)$ mit Hilfe des Rechners (5) in Abhängigkeit von dem zeitabhängigen Winkelsignal $\theta(t)$,
- Berechnen (170) eines normierten Zyklostationäritätsindikators $I_\alpha$ mit Hilfe eines statistischen Hypothesentests und in Abhängigkeit von dem Winkelschwingungssignal $s(\theta)$ mit dem Rechner (5), und

- Bestimmen (190) des Winkelschwingungssignal $s(\theta)$ als zyklostationär, wenn der Zyklostationäritätsindikator $I_\alpha$ größer oder gleich einem vorgegebenen Zyklostationäritätschwellenwert ist, wobei der vorgegebene Zyklostationäritätsschwellenwert zwischen 0 und 1 liegt,

**dadurch gekennzeichnet, dass** das Verfahren zum Bestimmen der Zyklostationärität erster Ordnung dient und der statistische Hypothesentest ein Student-Test ist, der auf einen Schätzwert $\hat{m}(\theta)$ eines synchronen Mittelwerts des Winkelschwingungssignals $s(\theta)$ in Bezug auf eine Zyklusperiode $\Phi$ angewandt wird, und dass das Berechnen (170) eines Zyklostationäritätsindikators $I_\alpha$ einen Zwischenschritt des Bestimmens eines statistischen Indikators $\eta_\alpha(\theta)$ umfasst, der gemäß der Beziehung

$$\overline{\eta_\alpha}(\theta) = t_\alpha^{K-1} \cdot \frac{\hat{\sigma}(\theta)}{\sqrt{K}}$$

berechnet wird,

wobei $t_\alpha^{K-1}$ die Hälfte eines Konfidenzintervalls ist, das mit dem Student-Test bei K-1 Freiheitsgraden mit einem Risiko 1-$\alpha$ verbunden ist,

$\hat{\sigma}(\theta)$ ein Schätzwert der Standardabweichung des Schwingungswinkelsignals $s(\theta)$ ist, das einer Normalverteilung für einen Winkel $\theta$ entspricht, und der wie folgt definiert ist:

$$\hat{\sigma}(\theta) = \sqrt{\widehat{vs}(\theta) \cdot \frac{K}{K-1}},$$

wobei
$\theta$ die Winkelposition des Drehelements (15) um die Drehachse (AX) ist,

$\widehat{vs}(\theta)$ ein Schätzwert der genannten synchronen Varianz des Winkelschwingungssignals $s(\theta)$ in Bezug auf die Zyklusperiode $\Phi$ ist, für den

$$\widehat{vs}(\theta) = \frac{1}{K} \sum_{i=0}^{K-1} [\hat{r}(\theta + i \cdot \Phi)]^2$$

gilt,
$\hat{r}(\theta)$ ein Schätzwert eines Rests des Schwingungswinkelsignals $s(\theta)$ ist, für den $\hat{r}(\theta) = s(\theta) - \hat{m}(\theta)$ gilt,
$\hat{m}(\theta)$ der Schätzwert des synchronen Mittelwerts in Bezug auf die genannte Zyklusperiode $\Phi$ ist, für den

$$\hat{m}(\theta) = \frac{1}{K} \sum_{i=0}^{K-1} s(\theta + i \cdot \Phi)$$

gilt,
$\sqrt{}$ die Quadratwurzelfunktion ist,
$\Sigma$ die Summenfunktion ist,
$\Phi$ die Zyklusperiode des Winkelschwingungssignals $s(\theta)$ ist,

K eine Anzahl von Zyklen ist, für die $K = \frac{N}{\Phi}$ gilt,

N eine Anzahl von Abtastpunkten ist, die das Winkelschwingungssignal $s(\theta)$ bilden, und
$i$ eine ganze Zahl ist, die von 0 bis $(K-1)$ variiert.

2. Verfahren nach Anspruch 1,

bei dem der Zyklostationäritätsindikator $I_\alpha$ anhand der folgenden Beziehung berechnet wird:

$$I_\alpha = \frac{\sum_\theta \left( |\hat{m}(\theta)| \cdot \mathcal{J}_{Cyc}(\theta) \right)}{\sum_\theta |\hat{m}(\theta)|}$$

wobei

$\mathcal{J}_{cyc}(\theta)$ eine Indikatorfunktion für die Zyklostationärität des Schwingungssignals $s(\theta)$ ist, die gleich 1 ist, wenn $\hat{m}(\theta) > \eta_\alpha(\theta)$ ist und gleich 0 ist, wenn $\hat{m}(\theta) \leq \eta_\alpha(\theta)$ ist, und
|| die Betragsfunktion ist.

3. Verfahren zur Bestimmung der Zyklostationärität eines Schwingungssignals in Bezug auf ein mechanisches System (10), wobei das mechanische System (10) mindestens ein um eine Drehachse (AX) drehbares Drehelement (15), mindestens einen Schwingungssensor (20), der das zeitabhängige Schwingungssignal $s(t)$ abgibt, einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,

wobei das Verfahren die folgenden Schritte umfasst:

- Umwandeln (140) des zeitabhängigen Schwingungssignals $s(t)$ in ein Winkelschwingungssignal $s(\theta)$ mit Hilfe des Rechners (5) in Abhängigkeit von dem zeitabhängigen Winkelsignal $\theta(t)$,
- Berechnen (170) eines normierten Zyklostationäritätsindikators $I_\alpha$ mit Hilfe eines statistischen Hypothesentests und in Abhängigkeit von dem Winkelschwingungssignal $s(\theta)$ mit dem Rechner (5), und
- Bestimmen (190) des Winkelschwingungssignal $s(\theta)$ als zyklostationär, wenn der Zyklostationäritätsindikator $I_\alpha$ größer oder gleich einem vorgegebenen Zyklostationäritätschwellenwert ist, wobei der vorgegebene Zyklostationäritätsschwellenwert zwischen 0 und 1 liegt,

**dadurch gekennzeichnet, dass** das Verfahren zur Bestimmung der Zyklostationärität zweiter Ordnung dient, und der statistische Hypothesentest ein Bartlett-Test ist, der auf einen Schätzwert $\widehat{vs}$ einer synchronen Varianz des Schwingungssignals $s(\theta)$ in Bezug auf eine Zyklusperiode $\Phi$ angewendet wird, und der Zyklostationäritätsindikator $I_\alpha$ gemäß der Beziehung

$$I_\alpha = exp\left(-\frac{x_{\tilde{\alpha}}^2}{\psi}\right)$$

berechnet wird, wobei
$exp$ die mathematische Exponentialfunktion ist,

$\psi$ ein Skalar ist, der in Abhängigkeit von der Schätzung $\widehat{vs}$ der synchronen Varianz so bestimmt wird, dass

$$\psi = \frac{3N.(K-1).\left[ln\left(\sum_{n=1}^N \widehat{vs}(\theta_n)/N\right) - \sum_{n=1}^N ln\left(\widehat{vs}(\theta_n)\right)/N\right]}{3N.(K-1)+N+1},$$

$\widehat{vs}(\theta)$ der Schätzwert der synchronen Varianz in Bezug auf die Zyklusperiode $\Phi$ ist, für den

$$\widehat{vs}(\theta) = \frac{1}{K}\sum_{i=0}^{K-1}[\hat{r}(\theta + i.\Phi)]^2$$

gilt,
$\hat{r}(\theta)$ ein Schätzwert eines Rests des Winkelschwingungssignals $s(\theta)$ ist, für den $\hat{r}(\theta) = s(\theta) = \hat{m}(\theta)$ gilt,
$\hat{m}(\theta)$ ein Schätzwert des synchronen Mittelwerts in Bezug auf die Zyklusperiode $\Phi$ ist, für den

$$\hat{m}(\theta) = \frac{1}{K}\sum_{i=0}^{K-1} s(\theta + i.\Phi)$$

gilt,
$\Sigma$ die Summenfunktion ist,
$\theta$ die Winkelposition des Drehelements (15) um die Drehachse (AX) ist,
$\Phi$ die Zyklusperiode des Winkelschwingungssignals $s(\theta)$ ist,

K eine Anzahl von Zyklen ist, für die $K = \frac{N}{\Phi}$ gilt,

N eine Anzahl von Abtastpunkten ist, die das Winkelschwingungssignal $s(\theta)$ bilden,
$i$ eine ganze Zahl ist, die von 0 bis $(K-1)$ variiert,
$ln$ die natürliche Logarithmusfunktion ist und

$\chi_\alpha^2$ ein Konfidenzintervall ist, das einer Chi-Quadrat-Verteilung mit (N-1) Freiheitsgraden und einem Risiko von 1-$\alpha$ zugeordnet ist. $\chi_\alpha^2$

**4.** Verfahren nach einem der Ansprüche 1 bis 3,
wobei das Verfahren mindestens einen der folgenden zusätzlichen Schritte umfasst:

- Erzeugen (192) einer Zyklostationäritätswarnung, wenn der Zyklostationäritätsindikator $I_\alpha$ größer oder gleich dem Zyklostationäritätsschwellenwert ist, und
- Erzeugen (194) einer Nicht-Zyklostationäritätswarnung, wenn der Zyklostationäritätsindikator $I_\alpha$ kleiner als der Zyklostationäritätsschwellenwert ist.

**5.** Anbringungsverfahren zum Anbringen mindestens eines Schwingungssensors (20) zur Überwachung eines mechanischen Systems (10), wobei das mechanische System (10) mindestens ein um eine Drehachse (AX) drehbares Drehelement (15), mindestens einen Schwingungssensor (20), einen Winkelsensor (25) und einen Rechner (5) umfasst,

wobei das Anbringungsverfahren die folgenden im Laufe von mindestens zwei aufeinanderfolgenden Iterationen durchgeführten Schritte umfasst:

- Positionieren und Ausrichten (210) des mindestens einen Schwingungssensors (20) an dem mechanischen System (10), wobei der mindestens eine Schwingungssensor (20) bei jeder Iteration in einer anderen Position und/oder Ausrichtung angeordnet wird,
- Abgeben (220) eines zeitabhängigen Schwingungssignals s(t) durch den mindestens einen Schwingungssensor (20) für verschiedene Betriebszustände des mechanischen Systems (10),
- Abgeben (230) eines zeitabhängigen, in Abhängigkeit von einer Winkelstellung des Drehelements (15) um die Drehachse (AX) variierendes Winkelsignals $\theta(t)$ durch den Winkelsensor (25), für die verschiedenen Betriebszustände des mechanischen Systems (10),
- Berechnen (250) eines Zyklostationäritätsindikators für das zeitabhängige Schwingungssignal $s(t)$ für die verschiedenen Betriebszustände des mechanischen Systems (10) unter Anwendung des Verfahrens zur Bestimmung der Zyklostationärität gemäß einem der Ansprüche 1 bis 4,

wobei das Anbringungsverfahren auch einen Schritt (280) des Validierens der Position und der Ausrichtung des mindestens einen Schwingungssensors (20) an dem mechanischen System (10) umfasst, in welchem die Position und die Ausrichtung des mindestens einen Schwingungssensors (20) validiert werden, wenn ein charakteristischer Wert der die Position und die Ausrichtung für die verschiedenen Betriebszustände des mechanischen Systems (10) betreffenden Zyklostationäritätsindikatoren $I_\alpha$ einen Validierungsschwellenwert überschreitet, wobei der charakteristische Wert aus einem Medianwert der Zyklostationäritätsindikatoren $I_\alpha$, einem arithmetischen Mittelwert der Zyklostationäritätsindikatoren $I_\alpha$ oder einem quadratischen Mittelwert der Zyklostationäritätsindikatoren $I_\alpha$ ausgewählt wird.

**6.** Verfahren nach Anspruch 5,
bei dem in dem Schritt des Validierens (280) die Position und die Ausrichtung des mindestens einen Schwingungssensors (20) validiert werden, wenn eine Differenz zwischen einem Maximalwert und einem Minimalwert der die Position und die Ausrichtung betreffenden Zyklostationäritätsindikatoren $I_\alpha$ ebenfalls kleiner als ein Differenzschwellenwert ist.

**7.** Verfahren nach Anspruch 6,
bei dem der Differenzschwellenwert einem Prozentsatz des charakteristischen Wertes der Zyklostationäritätsindikatoren $I_\alpha$ entspricht.

**8.** Verfahren nach einem der Ansprüche 5 bis 7,
bei dem die verschiedenen Betriebszustände des mechanischen Systems (10) nur stabilisierte Zustände umfassen und keine Übergangszustände umfassen.

9. Verfahren zum Überwachen eines mechanischen Systems (10), wobei das mechanische System (10) mindestens ein um eine Drehachse (AX) drehbares Drehelement (15), mindestens einen Schwingungssensor (20), der das zeitabhängige Schwingungssignal $s(t)$ abgibt, einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,
wobei das Verfahren die folgenden Schritte umfasst:

- Abgeben (320) des zeitabhängigen Schwingungssignals $s(t)$ durch den mindestens einen Schwingungssensor (20),
- Abgeben (330) des zeitabhängigen Winkelsignals $\theta(t)$ durch den Winkelsensor (25),
- Berechnen (350) eines Zyklostationäritätsindikators $I_\alpha$ für das zeitabhängige Schwingungssignal $s(t)$ unter Anwendung des Verfahrens zur Bestimmung der Zyklostationärität gemäß einem der Ansprüche 1 bis 4,
- wenn der Zyklostationäritätsindikator $I_\alpha$ größer oder gleich dem Zyklostationäritätschwellenwert ist, Berechnen (370) mindestens eines Überwachungsindikators für das mechanische System (10) mit Hilfe des Rechners (5) in Abhängigkeit von dem zeitabhängigen Schwingungssignal s(t), und
- Bestimmen (390) eines Vorliegens eines Fehlers an dem mechanischen System (10) durch einen Vergleich des mindestens einen Überwachungsindikators mit einem Fehlerschwellwert.

10. Verfahren nach Anspruch 9,
bei dem das Vorliegen eines Fehlers an dem mechanischen System (10) gegeben ist, wenn der mindestens eine Überwachungsindikator größer als der Fehlerschwellwert ist.

11. Verfahren nach einem der Ansprüche 9 bis 10,
bei dem der mindestens eine Überwachungsindikator gleich dem Zyklostationäritätsindikator $I_\alpha$ ist oder in Abhängigkeit von dem Zyklostationäritätsindikator $I_\alpha$ berechnet wird.

12. Vorrichtung zur Bestimmung einer Zyklostationärität (7), zum Validieren, ob ein zeitabhängiges Schwingungssignal $x(t)$ in Bezug auf ein mechanisches System (10) zyklostationär ist, wobei die Vorrichtung zur Bestimmung einer Zyklostationärität (7) konfiguriert ist für ein mechanisches System (10), das mindestens ein um eine Drehachse (AX) drehbares Drehelement (15) und mindestens einen Schwingungssensor (20) umfasst, der das zeitabhängige Schwingungssignal $s(t)$ abgibt, wobei die Vorrichtung zur Bestimmung einer Zyklostationärität (7) einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,
**dadurch gekennzeichnet, dass** die Vorrichtung zur Bestimmung einer Zyklostationärität (7) konfiguriert ist, um das Verfahren gemäß einem der Ansprüche 1 bis 4 durchzuführen.

13. Vorrichtung zum Anbringen (8) mindestens eines Schwingungssensors (20) zur Überwachung eines mechanischen Systems (10), wobei das mechanische System (10) mindestens ein um eine Drehachse (AX) drehbares Drehelement (15) und mindestens einen Schwingungssensor (20) umfasst, wobei die Vorrichtung zum Anbringen (8) einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,
**dadurch gekennzeichnet, dass** die Vorrichtung zum Anbringen (8) konfiguriert ist, um im Laufe von mindestens zwei Iterationen

- die Positionierung und Ausrichtung (210) des mindestens einen Schwingungssensor (20) an dem mechanischen System (10) zu empfangen, wobei der mindestens eine Schwingungssensor (20) bei jeder Iteration mit einer anderen Position und/oder Ausrichtung angeordnet ist,
- ein zeitabhängiges Schwingungssignal $s(t)$ für verschiedene Betriebszustände des mechanischen Systems (10) zu empfangen, das von dem mindestens einen Schwingungssensor (20) abgegeben wird, und
- die Schritte des Abgebens (230) eines zeitabhängigen Winkelsignals $\theta(t)$ durch den Winkelsensor (25) und des Berechnens (250) eines Zyklostationäritätsindikators $I_\alpha$ des Verfahrens nach einem der Ansprüche 5 bis 8 durchzuführen, wobei die Überwachungsvorrichtung (9) anschließend konfiguriert ist, den Verfahrensschritt des Validierens (280) der Position und der Ausrichtung des mindestens einen Schwingungssensors (20) durchzuführen.

14. Überwachungsvorrichtung (9) zum Überwachen eines mechanischen Systems (10), wobei die Überwachungsvorrichtung (9) zum Überwachen eines mechanischen Systems (10) mit mindestens einem um eine Drehachse (AX) drehbaren Drehelement (15) konfiguriert ist, wobei die Überwachungsvorrichtung (9) mindestens einen Schwingungssensor (20), der ein zeitabhängiges Schwingungssignal *s(t)* abgibt, einen Winkelsensor (25), der ein zeitabhängiges, in Abhängigkeit von einer Winkelstellung des Drehelements (15) um die Drehachse (AX) variierendes Winkelsignal $\theta(t)$ abgibt, und einen Rechner (5) umfasst,
**dadurch gekennzeichnet, dass** die Überwachungsvorrichtung (9) zur Durchführung des Verfahrens nach einem der Ansprüche 9 bis 11 konfiguriert ist.

15. Mechanisches System (10) mit mindestens einem um eine Drehachse (AX) drehbaren Drehelement (15), **dadurch gekennzeichnet, dass** das mechanische System (10) eine Überwachungsvorrichtung (9) gemäß Anspruch 14 umfasst.

16. Kraftübertragungsgetriebe (6) mit einem mechanischen System (10) gemäß Anspruch 15.

**Claims**

1. Method for determining the cyclostationarity of a vibratory signal relating to a mechanical system (10), said mechanical system (10) having at least one rotating member (15) rotating about an axis (AX) of rotation, at least one vibratory sensor (20) emitting a temporal vibratory signal *s(t),* an angular sensor (25) emitting a temporal angular signal $\theta(t)$ varying as a function of an angular position of said rotating member (15) about said axis (AX) of rotation and a calculator (5), said method having the following steps:

   - transforming (140) said temporal vibratory signal *s(t)* into an angular vibratory signal *s($\theta$)*, using said calculator (5) as a function of said temporal angular signal $\theta(t)$,
   - calculating (170) with said calculator (5) a normalized cyclostationarity indicator $I_\alpha$ using a statistical test of hypothesis and as a function of said angular vibratory signal *s($\theta$)*, and
   - determining (190) that said angular vibratory signal *s($\theta$)* is cyclostationary when said cyclostationarity indicator $I_\alpha$ is greater than or equal to a predetermined cyclostationarity threshold, said predetermined cyclostationarity threshold being between 0 and 1, **characterised in that** said method is dedicated to a determination of cyclostationarity of order 1, and said statistical test of hypothesis is a Student test applied to an estimate $\hat{m}(\theta)$ of a synchronous averaging of said angular vibratory signal *s($\theta$)* with respect to a cyclic period $\Phi$ and said calculation (170) of a cyclostationarity indicator $I_\alpha$ has an intermediate step of determining a statistical indicator $\eta_\alpha$

   *($\theta$)* calculated according to the following relationship:  $\eta_\alpha(\theta) = t_\alpha^{K-1} \cdot \dfrac{\hat{\sigma}(\theta)}{\sqrt{K}}$ , where  $t_\alpha^{K-1}$  is half of a confidence interval associated with said Student test at *K-1* degrees of freedom with a risk 1 - $\alpha$, $\hat{\sigma}(\theta)$ is an estimate of the standard deviation of said angular vibratory signal *s($\theta$)* responding to a normal law for an angle $\theta$ defined

   such that $\hat{\sigma}(\theta) = \sqrt{\widehat{vs}(\theta) \cdot \dfrac{K}{K-1}}$, $\theta$ is the angular position of said rotating member (15) about said axis (AX) of rotation,

   $\widehat{vs}(\theta)$ is an estimate of said synchronous variance of said angular vibratory signal *s($\theta$)* with respect to said

   cyclic period $\Phi$, such that  $\widehat{vs}(\theta) = \dfrac{1}{K}\sum_{i=0}^{K-1}[\hat{r}(\theta + i.\Phi)]^2$ ,

   $\hat{r}(\theta)$ is an estimate of a residue of said angular vibratory signal *s($\theta$)* such that $\hat{r}(\theta) = s(\theta) - \hat{m}(\theta)$, $\hat{m}(\theta)$ is said estimate of said synchronous averaging with respect to said cyclic period $\Phi$ such that

   $\hat{m}(\theta) = \dfrac{1}{K}\sum_{i=0}^{K-1} s(\theta + i.\Phi)$ ,

   $\sqrt{}$ is the square root function,
   $\Sigma$ is the sum function,
   $\Phi$ is said cyclic period of said angular vibratory signal *s($\theta$)*,

   *K* is a number of cycles such that  $K = \dfrac{N}{\Phi}$ ,

   N is a number of sampling points forming the angular vibratory signal *s($\theta$)*, and
   *i* is an integer varying from 0 to *(K-1).*

2. Method according to claim 1,

for which said cyclostationarity indicator $I_\alpha$ is calculated using the following relationship:

$$I_\alpha = \frac{\sum_\theta \left(|\hat{m}(\theta)|.\mathcal{J}_{Cyc}(\theta)\right)}{\sum_\theta |\hat{m}(\theta)|},$$

where $\mathcal{J}_{Cyc}(\theta)$ is an indicating function of the cyclostationarity of said angular vibratory signal $s(\theta)$ which is equal to 1 if $\hat{m}(\theta) > \eta_\alpha(\theta)$ and equal to 0 if $\hat{m}(\theta) \leq \eta_\alpha(\theta)$, and
$\|$ is the absolute value function.

3. Method for determining the cyclostationarity of a vibratory signal relating to a mechanical system (10), said mechanical system (10) having at least one rotating member (15) rotating about an axis (AX) of rotation, at least one vibratory sensor (20) emitting a temporal vibratory signal $s(t)$, an angular sensor (25) emitting a temporal angular signal $\theta(t)$ varying as a function of an angular position of said rotating member (15) about said axis (AX) of rotation and a calculator (5), said method having the following steps:

- transforming (140) said temporal vibratory signal $s(t)$ into an angular vibratory signal $s(\theta)$, using said calculator (5) as a function of said temporal angular signal $\theta(t)$,
- calculating (170) with said calculator (5) a normalized cyclostationarity indicator $I_\alpha$ using a statistical test of hypothesis and as a function of said angular vibratory signal $s(\theta)$, and
- determining (190) that said angular vibratory signal $s(\theta)$ is cyclostationary when said cyclostationarity indicator $I_\alpha$ is greater than or equal to a predetermined cyclostationarity threshold, said predetermined cyclostationarity threshold being between 0 and 1,
**characterised in that** said method is dedicated to a determination of cyclostationarity of order 2, and said statistical test of hypothesis is a Bartlett test applied to an estimate $\widehat{vs}$ of a synchronous variance of said angular vibratory signal $s(\theta)$ with respect to a cyclic period $\Phi$ and said cyclostationarity indicator $I_\alpha$ is calculated according to the following relationship:

$$I_\alpha = exp\left(-\frac{x_\alpha^2}{\psi}\right),$$

where $exp$ is the exponential mathematical function,

$\psi$ is a scalar determined as a function of said estimate $\widehat{vs}$ of said synchronous variance such that:

$$\psi = \frac{3N.(K-1).\left[ln\left(\sum_{n=1}^{N}\widehat{vs}(\theta_n)/N\right) - \sum_{n=1}^{N} ln\left(\widehat{vs}(\theta_n)\right)/N\right]}{3N.(K-1)+N+1}, \quad \widehat{vs}(\theta) \text{ is said estimate of said synchronous}$$

variance with respect to said cyclic period $\Phi$, such that $\widehat{vs}(\theta) = \frac{1}{K}\sum_{i=0}^{K-1}[\hat{r}(\theta + i.\Phi)]^2$,

$\hat{r}(\theta)$ is an estimate of a residue of said angular vibratory signal $s(\theta)$ such that $\hat{r}(\theta) = s(\theta) - \hat{m}(\theta)$, $\hat{m}(\theta)$ is an estimate of said synchronous averaging of said angular vibratory signal $s(\theta)$ with respect to said cyclic period $\Phi$, such that

$$\hat{m}(\theta) = \frac{1}{K}\sum_{i=0}^{K-1} s(\theta + i.\Phi),$$

$\sum$ is the sum function,
$\theta$ is the angular position of said rotating member (15) about said axis (AX) of rotation,
$\Phi$ is said cyclic period of said angular vibratory signal $s(\theta)$,

K is a number of cycles, such that $K = \frac{N}{\Phi}$, $N$ is a number of sampling points forming said angular vibratory signal $s(\theta)$
$i$ is an integer varying from 0 to $(K-1)$, $ln$ is the Neperian logarithm function, and

$\chi_\alpha^2$ , a confidence interval associated with a chi-squared test at *(N-1)* degrees of freedom with a risk 1 - α.

4. Method according to any one of claims 1 to 3,
for which said method has at least one additional step from among:

- a generation (192) of a cyclostationarity alert when said cyclostationarity indicator $I_\alpha$ is greater than or equal to said cyclostationarity threshold, and
- a generation (194) of a non-cyclostationarity alert when said cyclostationarity indicator $I_\alpha$ is less than said cyclostationarity threshold.

5. Arrangement method for arranging at least one vibratory sensor (20) dedicated to a monitoring of a mechanical system (10), said mechanical system (10) having at least one rotating member (15) rotating about an axis (AX) of rotation, at least one vibratory sensor (20), an angular sensor (25), and a calculator (5),

said arrangement method having the following steps carried out during at least two successive iterations:

- positioning and orientating (210) said at least one vibratory sensor (20) on said mechanical system (10), said at least one vibratory sensor (20) being located at a different position and/or orientation at each iteration,
- emitting (220) a temporal vibratory signal *s(t)* by said at least one vibratory sensor (20) for different operating modes of said mechanical system (10),
- emitting (230) a temporal angular signal $\theta(t)$ by the angular sensor (25) varying as a function of an angular position of said rotating member (15) about said axis (AX) of rotation for said different operating modes of said mechanical system (10),
- calculating (250) a cyclostationarity indicator $I_\alpha$ relating to said temporal vibratory signal *s(t)* for said different operating modes of said mechanical system (10), by applying the method for determining the cyclostationarity according to any one of claims 1 to 4,

said arrangement method also having a step (280) of validating said position and said orientation of said at least one vibratory sensor (20) on said mechanical system (10), during which said position and said orientation of said at least one vibratory sensor (20) are validated if a characteristic value of said cyclostationarity indicators $I_\alpha$ relating to said position and to said orientation for said different operating modes of said mechanical system (10) is greater than a validation threshold, said characteristic value being chosen from among a median value of said cyclostationarity indicators $I_\alpha$, an arithmetic averaging of said cyclostationarity indicators $I_\alpha$ or a quadratic averaging of said cyclostationarity indicators $I_\alpha$.

6. Method according to claim 5,
for which during said validation step (280), said position and said orientation of said at least one vibratory sensor (20) are validated if a difference between a maximum value and a minimum value of said cyclostationarity indicators $I_\alpha$ relating to said position and to said orientation is also less than a difference threshold.

7. Method according to claim 6,
for which said difference threshold is equal to a percentage of said characteristic value of said cyclostationarity indicators $I_\alpha$.

8. Method according to any one of claims 5 to 7,
for which said different operating modes of said mechanical system (10) only have stabilised modes and do not have transitional modes.

9. Method for monitoring a mechanical system (10), said mechanical system (10) having at least one rotating member (15) rotating about an axis (AX) of rotation, at least one vibratory sensor (20) emitting a temporal vibratory signal x(t), an angular sensor (25) emitting a temporal angular signal $\theta(t)$ varying as a function of an angular position of said rotating member (15) about said axis (AX) of rotation and a calculator (5),
said method having the following steps:

- emitting (320) said temporal vibratory signal *s(t)* by said at least one vibratory sensor (20),
- emitting (330) said temporal angular signal $\theta(t)$ by said angular sensor (25),
- calculating (350) a cyclostationarity indicator $I_\alpha$ for said temporal vibratory signal *s(t),* by applying the method for determining the cyclostationarity according to any one of claims 1 to 4,

- if said cyclostationarity indicator $I_\alpha$ is greater than or equal to said cyclostationarity threshold, calculating (370) at least one monitoring indicator of said mechanical system (10) using said calculator (5) as a function of said temporal vibratory signal *s(t),* and

- determining (390) a presence of a fault on said mechanical system (10) according to a comparison of said at least one monitoring indicator with a fault threshold.

10. Method according to claim 9,

for which said presence of a fault on said mechanical system (10) is effective if said at least one monitoring indicator is greater than said fault threshold.

11. Method according to any one of claims 9 to 10,

for which said at least one monitoring indicator is equal to said cyclostationarity indicator $I_\alpha$ or is calculated as a function of said cyclostationarity indicator $I_\alpha$.

12. Device (7) for determining a cyclostationarity to validate if a temporal vibratory signal x(t) relating to a mechanical system (10) is cyclostationary, said device (7) for determining a cyclostationarity being configured for a mechanical system (10) having at least one rotating member (15) rotating about an axis (AX) of rotation and at least one vibratory sensor (20) emitting said temporal vibratory signal *s(t),* said device (7) for determining a cyclostationarity having an angular sensor (25) emitting a temporal angular signal $\theta$(t) varying as a function of an angular position of said rotating member (15) about the axis (AX) of rotation, and a calculator (5),

**characterised in that** said device (7) for determining a cyclostationarity is configured to implement the method according to any one of claims 1 to 4.

13. Device (8) for arranging at least one vibratory sensor (20) dedicated to a monitoring of a mechanical system (10), said mechanical system (10) having at least one rotating member (15) rotating about an axis (AX) of rotation, at least one vibratory sensor (20), said arrangement device (8) having an angular sensor (25) emitting a temporal angular signal $\theta$ (t) varying as a function of an angular position of said rotating member (15) about said axis (AX) of rotation and a calculator (5),

**characterised in that** said arrangement device (8) is configured, during at least two iterations,

- to receive the positioning and the orientation (210) of said at least one vibratory sensor (20) on said mechanical system (10), said at least one vibratory sensor (20) being located at a different position and/or orientation at each iteration,

- to receive a temporal vibratory signal *s(t)* emitted by said at least one vibratory sensor (20) for different operating modes of said mechanical system (10), and

- for implementing steps (230) of emitting a temporal angular signal $\theta$(t) by the angular sensor (25) and of calculating (250) a cyclostationarity indicator $I_\alpha$ of the method according to any one of claims 5 to 8, said monitoring device (9) then being configured to implement the step (280) of validating said position and said orientation of said at least one vibratory sensor (20) of said method.

14. Monitoring device (9) to monitor a mechanical system (10), said monitoring device (9) being configured to monitor a mechanical system (10) having at least one rotating member (15) rotating about an axis (AX) of rotation, said monitoring device (9) having at least one vibratory sensor (20) emitting a temporal vibratory signal *s(t),* an angular sensor (25) emitting a temporal angular signal $\theta(t)$ varying as

a function of an angular position of said rotating member (15) about the axis (AX) of rotation and a calculator (5),

**characterised in that** said monitoring device (9) is configured to implement the method according to any one of claims 9 to 11.

15. Mechanical system (10) having at least one rotating member (15) rotating about an axis (AX) of rotation, **characterised in that** said mechanical system (10) has a monitoring device (9) according to claim 14.

16. Power transmission box (6) having a mechanical system (10) according to claim 15.

Fig.1

Fig.2

## Fig.3

210

220    230

250

290

292

294

## Fig.4

Non cyclostationnaire

Acquisition Vibratoire → Détermination cyclostationnarité du signal → cyclo-stationnaire → Calcul des indicateurs → Décision

## Fig.5

320

350

370

390 --- 392

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3531098 A

**Littérature non-brevet citée dans la description**

- **DE HASAN OZTURK** ; **ISA YESILYURT** ; **MUSTAFA SABUNCU**. Investigation of effectiveness of some vibration-based techniques in early detection of real-time fatigue failure in gears. *Shock and vibration*, 2010, vol. 12, 741-747
- **F. BONNARDOT** ; **A. AL ZOHBI** ; **M. EL BADAOUI** ; **F. GUILLET**. Aide à l'interprétation des signaux cyclostationnaires. *CNR'IUT, Tarbes*, 2003
- **M.D. COATS** ; **N. SAWALHI** ; **R. B. RANDALL**. Extraction of tacho information from a vibration signal for improved synchronous averaging. *Annual Conference of the Australian Acoustical Society 2009 - Acoustics 2009: Research to Consulting*, 2009, 187-194
- **KASS SOUHAYB et al.** *Self-running bearing diagnosis based on scalar indicator using fast order frequency spectral coherence*, February 2019
- **RAAD et al.** *Indicators of cyclostationarity: Theory and application to gear fault monitoring*, January 2008
- **ANTONI et al.** *Cyclic spectral analysis of rolling-element bearing signals: Facts and fictions*, May 2007
- **XIAOFENG LIU et al.** *Application of order cyclostationary demodulation to damage detection in a direct-driven wind turbine bearing*, December 2013
- **ANTONI et al.** *Cyclostationarity by examples*, May 2009
- **DANDAWATE A V et al.** *Statistical Tests for Presence of Cyclostationarity*, September 1994